## Europäisches Patentamt

## European Patent Office

## Office européen des brevets

(11) Veröffentlichungsnummer: **0 108 969**
**B1**

# (12) EUROPÄISCHE PATENTSCHRIFT

(45) Veröffentlichungstag der Patentschrift: **16.05.90**

(21) Anmeldenummer: **83110705.7**

(22) Anmeldetag: **26.10.83**

(51) Int. Cl.⁵: **G 06 F 13/00**

(54) **DMA-Steuereinrichtung zur Übertragung von Daten zwischen einem Datensender und einem Datenempfänger.**

(30) Priorität: **09.11.82 DE 3241376**

(43) Veröffentlichungstag der Anmeldung:
**23.05.84 Patentblatt 84/21**

(45) Bekanntmachung des Hinweises auf die
Patenterteilung:
**16.05.90 Patentblatt 90/20**

(84) Benannte Vertragsstaaten:
**AT DE FR GB IT**

(56) Entgegenhaltungen:

**WESCON TECHNICAL PAPERS, Band 26,
September 1982, Kapitel 2014, Seiten 1-6,
Western Periodicals Co., North Hollywood, US;
T.W. CANTRELL: "The HD68450 - A versatile
DMA controller for high performance system
design"**

**ELECTRONIC DESIGN, Band 27, Nr. 7, 29. März
1979, Seiten 102-106, Hayden Publishing Co.,
Rochelle Park, US; D. STAMM et al.: "Free the
muC's CPU from I/O hassles with a special I/O
processor"**

(73) Patentinhaber: **Siemens Aktiengesellschaft
Wittelsbacherplatz 2
D-8000 München 2 (DE)**

(72) Erfinder: **Böning, Werner, Ing. grad.
Washingtonstrasse 17
D-8000 München 19 (DE)**
Erfinder: **Wagner, Wolfgang, Dipl.-Ing.
Wachenheimerstrasse 15
D-8000 München 90 (DE)**
Erfinder: **Gandhi, Sharad
1 Lakeview Dr, Apt 6S
Peekskill, N.Y. 10566 (US)**
Erfinder: **Stadlmeier, Hans, Dipl.-Ing.
Aichacherstrasse 2
D-8000 München 70 (DE)**
Erfinder: **Schönberger, Franz, Dipl.-Ing.
Grasmückenweg 23
D-8000 München 45 (DE)**

(56) Entgegenhaltungen:

**ELEKTRONIK PRAXIS, Nr. 9, September 1982,
Seiten 131-134, Würzburg, DE; A. BODE et al.:
"Systementwurf mit Bitslice-Mikroprozessoren"**

**ELECTRONICS LETTERS, Band 17, Nr. 19, 17.
September 1981, Seiten 709,710, London, GB;
C.A. PAPACHRISTOU: "Method for direct
multiway branching in microprogram control"**

# Beschreibung

Die Erfindung bezieht sich auf eine DMA-Steuereinrichtung zur Übertragung von Daten zwischen einem Datensender und einem Datenempfänger nach dem Oberbegriff des Patentanspruches 1.

Aus der DE—PS 23 49 813 und 23 39 787 ist es bekannt, daß Datentransfers zwischen einem Datensender, z.B. einem Speicher, und einem Datenempfänger, z.B. einem peripheren Gerät, bei einem Datenverarbeitungssystem mit Hilfe von sogenannten Kanalprogrammen durchgeführt wird. Die Kanalprogramme geben an, wie der Datentransfer durchzuführen ist, sie geben aber auch an, wie die organisatorischen Abläufe, wie Gerätestart, Gerätezustandsabfrage, Gerätestop, Unterbrechungsanforderung an die Recheneinheit usw. auszuführen sind. Die Kanalprogramme werden im Datenverarbeitungssystem dieser Art mit Hilfe von Kanalwerken durchgeführt, die zum Teil unabhängig von der Recheneinheit des Datenverarbeitungssystems den Datentransfer durchführen.

Die Kanalwerke von derartigen Großrechnern führen den Datentransfer entweder im Selektorbetrieb oder im Multiplexbetrieb durch. Der Multiplexbetrieb kann dabei ein Byte-Multiplexbetrieb oder Block-Multiplexbetrieb sein. Die Übertragungseinrichtungen, über die der Datentransfer erfolgt, werden im folgenden Kanäle genannt.

Die Steuerung des Datentransfers zwischen einem Datensender und einem Datenempfänger kann auch mit Hilfe von Mikrocomputersystemen erfolgen. Solche Mikrocomputersysteme enthalten in der Regel mindestens einen Mikroprozessor einen Speicher und periphere Geräte, die entweder direkt oder über Zwischeneinheiten mit einem externen Bus verbunden sind. Über den externen Bus erfolgt dann die Übertragung der Adressen, der Daten und der Steuersignale. Die Steuerung des Datentransfers z.B. zwischen dem Speicher und einem peripheren Gerät wird vom Mikroprozessor in Abhängigkeit der obengenannten Kanalprogramme gesteuert. Dazu enthalten die Kanalprogramme Transferbefehle, die angeben, von welchem Datensender zu welchem Datenempfänger die Daten zu übertragen sind und Steuerbefehle, die die organisatorischen Abläufe steuern.

Um den Mikroprozessor von der Steuerung zu entlasten, ist es bekannt, zusätzlich an den externen Bus eine DMA-Steuereinrichtung anzuschließen, die den Datentransfer weitgehend unabhängig vom Mikroprozessor steuert. Während die DMA-Steuereinrichtung den Datentransfer durchführt, kann der Mikroprozessor andere Aufgaben erledigen. Ein derartiges Mikrocomputersystem ergibt sich z.B. aus Elektronikpraxis, No. 9, September 1982, Seiten 131 bis 134.

Aus Wescon Technical Papers, Bd. 26, September 1982, Kapitel 20/4, S. 1 bis 6 ist beispielsweise eine registergesteuerte DMA-Steuereinrichtung bekannt, deren Register komplett vor jeder DMA-Operation vom Mikroprozessor geladen werden müssen.

Die aus "Electronic Design", Bd. 27, Nr. 7, S. 102 bis 106 bekannte DMA-Steuerung besitzt selbst einen prozessorähnlichen Befehlssatz. Auch die Ein/Ausgabe ist dabei befehlsgesteuert und muß vom Benutzer programmiert werden.

Die der Erfindung zugrundeliegende Aufgabe besteht darin, eine DMA-Steuereinrichtung anzubieten, die in MOS-Technologie aufgebaut ist und die eine Datenübertragung mit sehr hohen Geschwindigkeiten über einen oder mehrere Kanäle ermöglicht. Diese Aufgabe wird bei einer Steuereinrichtung der eingangs angegebenen Art dadurch gelöst, daß eine zentrale Steuereinheit vorgesehen ist, die in Abhängigkeit von einem Kanalbefehl einen Mikrobefehl eines den Kanalbefehl zugeordneten Mikroprogramms adressiert und dabei dem Mikrobefehl entsprechende Adreß- und Steuersignale an einen internen Adreß/Steuerbus anlegt, daß eine Adresseneinheit vorgesehen ist, die an den internen Adreß/Steuerbus und an einen internen Datenbus angeschlossen ist, in der die Adressen der Datenempfänger, Datensender und der Kanalprogramme gespeichert sind, die eine im Mikrobefehl angesprochene Adresse am Ausgang abgibt und gleichzeitig die neue Adresse berechnet und einspeichert, daß eine Dateneinheit vorgesehen ist, in der die zu übertragenden Daten zwischengespeichert werden und die an den internen Adreß/Steuerbus und Datenbus angeschlossen ist, daß eine an den internen Datenbus und Adreß/Steuerbus angeschlossene Bytezählereinheit vorgesehen ist, die die Anzahl der zu übertragenden Bytes bei einem Transferbefehl zählt und bei Erreichen der gewünschten Anzahl ein Signal an die zentrale Steuereinheit abgibt, daß eine Busschnittstellenschaltung vorgesehen ist, die mit dem Ausgang der Adresseneinheit, mit dem externen Adreßbus und mit dem internen Adreß/Steuerbus zur Übertragung von Adressen verbunden ist und die an den externen Datenbus zur Übertragung der Daten zu/von der Dateneinheit angeschlossen ist, und daß ein Steuerregistersatz vorgesehen ist, der mit dem internen Datenbus und Adreß/Steuerbus zur Aufnahme von Kanalbefehlen, Statuswörtern und anderen Steuerinformationen verbunden ist und von dem Leitungen zur Übertragung von Steuersignalen zu der zentralen Steuereinheit führen, und daß die Einheiten so ausgeführt sind, daß sie die ihnen übertragenen Aufgaben selbstständig ausführen.

Eine besonders einfach aufgebaute zentrale Steuereinheit kann bestehen aus einer Mikroprogrammeinheit mit einem Sequencer, mit einem mit dem Sequencer verbundenen Mikroprogrammspeicher zur Aufnahme der den Kanalbefehlen zugeordneten Mikroprogramme und mit einem mit dem Mikroprogrammspeicher verbundenen Mikrobefehlszwischenregister, aus einer ersten Mikrobefehlsregistereinheit mit einem mit dem Mikrobefehlszwischenregister verbundenen ersten Mikrobefehlsregister, das an den internen Adreß/Steuerbus und an den Sequencer angeschlossen ist und mit einem mit dem ersten Mikrobefehlsregister verbundenen zweiten Mikrobefehlsregister, und aus einer zweiten Mikrobefehlsregistereinheit, die mit dem zweiten Mikrobefehlsregister verbunden ist und die an den internen Adreß/Steuerbus angeschlossen ist.

Zweckmäßigerweise enthält die Adresseneinheit einen Adressenregistersatz zur Speicherung der Datensender-Datenempfänger- und Kanalprogrammadressen, der mit dem internen Adreß/Steuerbus zur Übernahme der Adressen eines zu ladenden Adreßregisters und mit dem internen Datenbus zur Übernahme des zu ladenden Inhaltes des adressierten Adressenregisters verbunden ist und der an das erste Mikrobefehlsregister zur Übernahme der Adresse desjenigen Adressenregisters angeschlossen ist, dessen Inhalt an den Ausgang zur Schnittstellenschaltung übertragen wird. Zusätzlich enthält die Adresseneinheit einen Adressenrechner, dessen Ausgang mit dem Eingang des Adressenregistersatzes, dessen einer Eingang mit dem Ausgang des Adressenregistersatzes und dessen anderer Eingang mit einem ersten Multiplexer verbunden ist, über den die zu der aus dem Adressenregister ausgegebenen Adresse hinzuzurechnende Größe zugeführt wird.

Die Schnittstellenschaltung kann aufgebaut sein aus einer Adressenpufferschaltung, die am Ausgang der Adresseneinheit angeschaltet ist und die mit dem externen Adreßbus und über einen Schalter mit dem internen Adreß/Steuerbus verbunden ist, aus einer Datenpufferschaltung, die mit dem externen Datenbus über ein Eingangsregister und Ausgangsregister verbunden ist und aus einem Taktgenerator, der aus einem externen Takt die zur Zusammenarbeit dar Einheiten erforderlichen Taktsignale erzeugt. Eine derartige Schnittstellenschaltung ist einfach aufgebaut und ermöglicht unabhängig von der Tätigkeit der Adresseneinheit und der Dateneinheit die Übertragung von Adressen und Daten vom/zum externen Adreß- und Datenbus.

Die Steuereinrichtung soll so aufgebaut sein, daß eine Datenübertragung über mehrere Kanäle gesteuert werden kann. Dabei soll möglichst schnell von einem Kanal zu einem anderen Kanal umgeschaltet werden können. Und zwar so schnell, daß die Summendatenrate, mit der über mehrere Kanäle übertragen wird, der Einzeldatenrate, mit der über einen einzelnen Kanal übertragen wird, entspricht. Um dies zu erreichen, kann das Mikroadressenregister und das Mikrobefehlszwischenregister in der Mikroprogrammeinheit, die Adressenregister in der Adresseneinheit und die Steuerregister im Steuerregistersatz entsprechend der Zahl der Übertragungskanäle mehrfach ausgeführt sein. Mit Hilfe einer in der zentralen Steuereinheit vorgesehenen Prioritätsschaltung wird dann jeweils eines der Register entsprechend einer Prioritätsentscheidung dem ausgewählten Kanal zugeordnet.

Um eine Datenrate von z.B. 8 M Byte/sec bei der Datenübertragung zu erreichen, sind die einzelnen Einheiten der DMA-Steuereinrichtung so ausgführt, daß sie unabhängig voneinander und teilweise gleichzeitig zueinander einzelne Aufgaben bei der Steuerung der Datenübertragung übernehmen können. Um dies zu erreichen besteht ein Verfahren zum Betrieb der DMA-Steuereinrichtung darin, daß in einem ersten Taktzyklus der bereits im Mikrobefehlszwischenregister gespeicherte aktuelle Mikrobefehl in das erste Mikrobefehlsregister der ersten Mikrobefehlsregistereinheit übernommen wird und dort bis zum Ende eines zweiten Taktzyklus gespeichert wird, daß in der zweiten Hälfte des zweiten Taktzyklus der aktuelle Mikrobefehl von dem ersten Mikrobefehlsregister in das zweite Mikrobefehlsregister übernommen wird und dort bis zur Hälfte eines vierten Taktzyklus gespeichert wird, daß zu Beginn des vierten Taktzyklus bis zum Ende eines fünften Taktzyklus der aktuelle Mikrobefehl vom zweiten Mikrobefehlsregister in die zweite Mikrobefehlsregistereinheit übernommen wird und von dort an den internen Adreß/Steuerbus gelegt wird, daß in der zweiten Hälfte des ersten Taktzyklus das im aktuellen Mikrobefehl adressierte Adressenregister in der Adresseneinheit gelesen wird, daß in der ersten Hälfte des zweiten Taktzyklus der Inhalt dieses Adressenregisters durch den Adressenrechner neu berechnet wird und der neue Inhalt in der zweiten Hälfte des zweiten Taktzyklus in dieses Adressenregister zurückgeschrieben wird, daß mit Beginn des zweiten Taktzyklus bis zum Ende des dritten Taktzyklus die Adresse aus der Adresseneinheit von der Schnittstellenschaltung an den externen Adreßbus gelegt wird, daß bei einem Schreibbefehl mit Beginn des dritten Taktzyklus bis zum Ende des vierten Taktzyklus das Schreibdatum von der Schnittstellenschaltung an den externen Datenbus angelegt wird, daß bei Vorliegen eines Lesebefehls in der ersten Hälfte des vierten Taktzyklus das auf dem externen Datenbus liegende Lesedatum von der Schnittstellenschaltung übernommen wird, daß in der zweiten Hälfte des vierten Taktzyklus das Lesedatum in die Dateneinheit übertragen wird und dort gespeichert wird, daß in der ersten Hälfte des ersten Taktzyklus von der Mikroprogrammeinheit die Adresse des nächsten zu bearbeitenden Mikrobefehls berechnet wird und während der zweiten Hälfte des ersten Taktzyklus gespeichert wird, daß während der ersten Hälfte des zweiten Taktsyklus der nächste Mikrobefehl gelesen wird und in der zweiten Hälfte des zweiten Taktzyklus im Mikrobefehlszwischenregister zwischengespeichert wird, und daß zu Beginn des dritten Taktzyklus der nächste aktuelle Mikrobefehl in das erste Mikrobefehlsregister der ersten Mikrobefehlsregistereinheit übernommen wird und dort bit zum Ende des vierten Taktzyklus gespeichert wird und daß die nächsten Verfahrensschnitte den oben angegebenen Verfahrensschritten entsprechen.

Andere Weiterbildungen im Aufbau der DMA-Steuereinrichtung und im Verfahren zum Betrieb der DMA-Steuereinrichtung ergeben sich aus den Unteransprüchen.

Die hohe Datenübertragungsrate unter Steuerung der DMA-Steuereinrichtung wird somit dadurch erreicht, daß die Bearbeitung eines Datentransfers über den externen Bus, also eine Buszyklus, in einzelne Schritt unterteilt ist, daß diese Schritt von zugeordneten Einheiten eigenständig bearbeitet werden, daß diese Einheiten meistenteils simultan zueinander arbeiten und daß die Einheiten so unabhängig voneinander sind, daß zu einem bestimmten Zeitpunkt fast jede Einheit einen anderen Kanal bearbeiten kann. Dazu gibt eine Einheit, wenn sie mit ihrer Tätigkeit fertig ist, die Aufgabe an die nächste Einheit weiter und beginnt selbst wieder mit einer neuen Aufgabe, die bereits schon wieder einem anderen Kanal zugeordnet sein kann. Gleichzeitig können aber auch mehrere Einheiten am selben Buszyklus arbeiten, um die zur Ausführung eines Buszyklus erforderlichen Aufgaben in der kurzen Zeit ausführen zu können. Um die Geschwindigkeit der Datenübertragung noch zu steigern, können die einzelnen Einheiten der DMA-Steuereinrichtung weiter in Untereinheiten aufgeteilt sein, die ihrerseits wieder die den Einheiten zugeordneten Aufgaben aufteilen und getrennt behandeln.

Anhand eines Ausführungsbeispieles, das in den Figuren dargestellt ist, wird die Erfindung weiter erläutert. Es zeigen.

Fig. 1 ein Mikrocomputersystem mit der DMA-Steuereinrichtung,

Fig. 2 ein Blockschaltbild der DMA-Steuereinrichtung,

Fig. 3 ein ausführlicheres Schaltbild der DMA-Steuereinrichtung,

Fig. 4 Der Aufbau der Adressenregister der Adresseneinheit,

Fig. 5 einen Aufbau der Schnittstellenschaltung,

Fig. 6 einen Kanalbefehl des Kanalprogramms,

Fig. 7 ein Zeitdiagramm, das die sich überlappende Tätigkeit der einzelnen Einheiten der DMA-Steuereinrichtung zeigt.

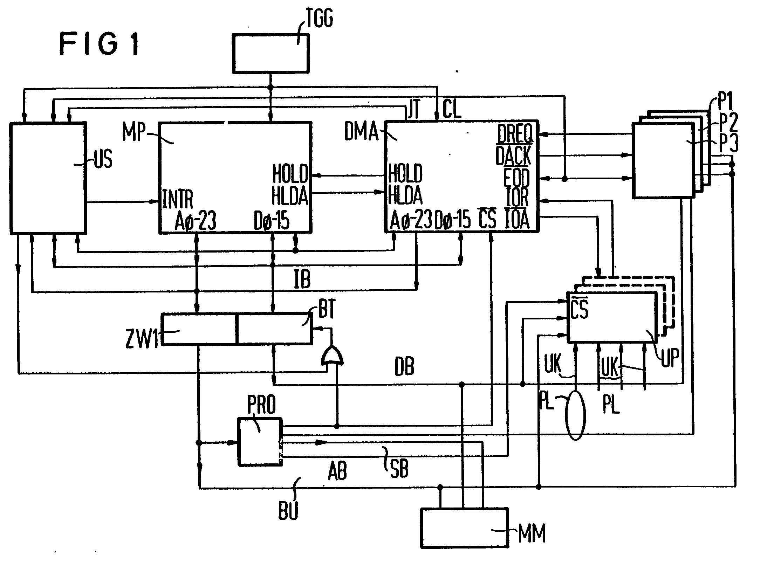

Fig. 1 zeigt einen möglichen Aufbau eines Mikrocomputersystems mit einer DMA-Steuereinrichtung. Ein Mikroprozessor MP und die DMA-Steuereinrichtung DMA ist über einen internen Bus IB zur Übertragung von Daten, Adressen und Steuersignale miteinander verbunden. Dem Mikroprozessor MP ist eine Unterbrechungssteuerung US zugeordnet, die Unterbrechungsanforderungen IT von der Steuereinrichtung DMA bzw. von anderen Stellen des Mikrocomputersystems in aufbereiteter Form den Mikroprozessor MP zuführt. Der interne Bus IB ist über Zwischenspeicher ZW1, Bustreiber BT mit einem externen Bus BU verbunden, der aus einem Adreßbus AD, einem Datenbus DB und einem Steuerbus SB besteht. An den externen Bus BU ist ein Speicher MM, sowie externe Geräte P1, P2 und P3 angeschlossen. Zudem liegt am externen Bus BU eine Unterbrechungs- und Prioritätssteuerung UP, von der aus Unterkanäle UK zu langsamen peripheren Geräten PL führen. Der zum Betrieb des Mikrocomputersystems erforderliche Takt wird durch einen Taktgenerator TGG abgegeben.

Die Ansteuerung der einzelen Einheiten des Mikrocomputersystems durch den Mikroprozessor MP erfolgt über den externen Steuerbus SB, bei dem ausgehend von Adressen der anzusteuernden Einheiten durch einen PROM-Baustein PRO das entsprechende Auswahlsignal erzeugt wird. Der Zugriff zum Bus zwischen dem Mikroprozessor MP und der Steuereinrichtung DMA wird durch die Signale HOLD und HLDA festgelegt. Der Datentransfer zwischen z.B. dem Speicher MM und den peripheren Geräten P1 bis P3 wird durch die Steuereinrichtung DMA gesteuert und zwar mit Hilfe von Bedienungsanforderungen DREQ von den peripheren Geräten und Quittungssignalen DACK von der Steuereinrichtung DMA.

Unterbrechungsanforderungen zwischen den peripheren Geräten P1 bis P3 und der Steuereinrichtung DMA werden über Signale EOD ausgetauscht. Die Geräte P1 bis P3 sind a schnelle Geräte und der Datentransfer zwischen diesen peripheren Geräten und z.B. dem Speicher MM erfolgt im Selektorbetrieb.

Die Unterbrechungssteuerung UP, mit der die langsamen peripheren Geräte PL über die Unterkanäle UK verbunden sind, arbeitet mit der Steuerung DMA mit Hilfe von Bedienungsanforderungen OR und Quittungssignalen IOA zusammen. Wenn mehrere periphere Geräte PL über mehrere Unterkanäle UK Bedienungsanforderungen stellen, dan wählt die Unterbrechungssteuerung UP entsprechend der Prioritäten der peripheren Geräte PL das höchstpriore periphere Gerät aus und gibt dessen Bedienungsanforderung an die Steuereinrichtung DMA. Diese quittiert die Bedienungsanforderung und leitet den gewünschten Datentransfer zwischen dem peripheren Gerät und z.B. dem Speicher MM ein. Da die Geräte PL langsame Geräte sind, kann der Datentransfer zwischen ihnen und dem Datenempfänger bzw. Datensender im Multiplexbetrieb erfolgen.

Die in Figure 1 gezeigten Einheiten sind alles handelsübliche Bausteine bis auf die Steuereinrichtung DMA, die in den folgenden Figuren ausführlicher dargestellt ist.

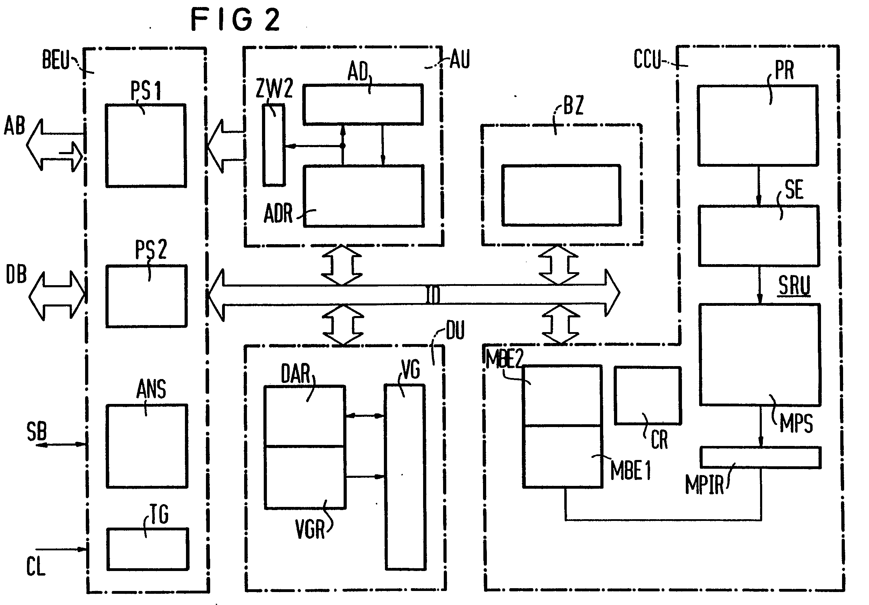

Figure 2 zeigt ein Blockschaltbild der DMA Steuereinrichtung. Diese enthält zunächst eine zentrale Steuereinheit CCU, die aus mehreren Untereinheiten besteht. Eine erste Untereinheit SRU wird im folgenden Mikroprogrammeinheit genannt. Sie besteht aus einem Sequencer SE, einem Mikroprogrammspeicher MPS und einem Mikrobefehlszwischenregister MPIR. Die Aufgabe der Mikroprogrammeinheit SRU besteht darin, die Mikroprogrammadressen der im Mikroprogrammspeicher MPS abgespeicherten den Startbefehlen, Stopbefehlen und Kanalbe-4.11.1982—II 1 The befehlen zugeordneten Programme zu erzeugen, mit der Adresse den Mikrobefehl aus dem Mikroprogrammspeicher MPS zu lesen und in das entsprechend der Prioritätsentscheidung durch eine Prioritätsschaltung PR ausgewählte Mikrobefehlzwischenregister MPIR abzuspeichern. Anschließend kann die Adresse des nächsten Mikrobefehls mit Hilfe des Sequencers erzeugt werden, wobei der zugeordnete Mikrobefehl bereits einem Mikroprogramm angehören kann, das für einen anderen Kanal gilt.

Die zentrale Steuereinheit CCU enthält weiterhin eine erste Mikrobefehlseinheit MBE1, die aus einem ersten Mikrobefehlsregister und einem zweiten Mikrobefehlsregister besteht. Die erste Mikrobefehlsregistereinheit MBE1 übernimmt den auszuführenden Mikrobefehl, den aktuellen Mikrobefehl, aus dem Mikrobefehlszwischenregister MPIR und überträgt ihn in das erste Mikrobefehlsregister. Damit beginnt die Ausführung dieses Mikrobefehls. Weiterhin wird der aktuelle Mikrobefehl an das zweite Mikrobefehlsregister weitergegeben. Damit wird das erste Mikrobefehlsregister wieder frei und es kann der nächste Mikrobefehl aus dem Mikrobefehlszwischenregister MPIR übernommen werden. Dieser nächste Mikrobefehl kann auch einem Mikroprogramm angehören, daß einem anderen Kanal zugeordnet ist.

Die zentrale Steuereinheit CCU enthält schließlich eine zweite Mikrobefehlsregistereinheit MBE2 mit einem Mikrobefehlsregister, in die der aktuelle Mikrobefehl aus dem zweiten Mikrobefehlsregister übernommen wird. Durch die zweite Mikrobefehlsregistereinheit MBE2 werden entsprechend dem aktuellen Mikrobefehl weitere Steuersignale an andere Einheiten der DMA Steuereinrichtung gegeben. Z.B. wird durch diese Steuersignale der Datentransfer bei einem Lesebefehl gesteuert. Bei einem Lesebefehl werden Daten von einem Datensender in die DMA Steuereinrichtung übertragen. Wenn der aktuelle Mikrobefehl ausgeführt ist, kann ein neuer Mikrobefehl in die zweite Mikrobefehlsregistereinheit MBE2 übernommen, werden wobei auch dieser neue Mikrobefehl einem anderen Kanal zugeordnet sein kann.

In der zentralen Steuereinheit CCU ist weiterhin ein Kontrollregistersatz CR angedeutet, in dem der Start/Stopbefehl, Kanalbefehle und andere Steuerinformation für die DMA Steuereinrichtung abgespeichert werden. Diese werden zum Teil vom Mikroprozessor MP in den Steuerregistersatz CR eingetragen.

Die DMA Steuereinrichtung enthält weiterhin eine Adresseneinheit AU, in der Adressenregister ADR, ein Adressenrechner AD und ein Zwischenspeicher ZW2 enthalten sind. In den Adressenregistern ADR sind die Adressen des Datensenders, des Datenempfängers und die Adresse des nächsten Kanalbefehls gespeichert. Aus dem aktuellen Mikrobefehl in der zentralen Steuereinheit CCU ergibt sich, welches Adressenregister ADR in der Adresseneinheit AU zu lesen oder zu beschreiben ist. Der Inhalt des ausgewählten Adressenregisters kann an die Busschnittstellenschaltung BEU gegeben werden und anschließend der Inhalt dieses Adressenregisters neu berechnet und in das Adressenregister zurückgespeichert werden. Die Adresseneinheit AU kann ihre Aufgaben gleichzeitig mit der Tätigkeit der ersten Mikrobefehlsregistereinheit MBE1 ausführen, da die dazu erforderlichen Informationen aus dem ersten Mikrobefehlsregister des ersten Mikrobefehlsregistersatzes MBE1 abgegeben werden. In dem Augenblick, in dem der nächste Mikrobefehl in das erste Mikrobefehlsregister übernommen wird, der ja einem anderen Kanal zugeordnet sein kann, wird die Adresseneinheit AU diesen nächsten Mikrobefehl entsprechend den für die Adresseneinheit AU bestimmten Informationen ausführen.

Mit Hilfe der Dateneinheit DU der DMA Steuereinrichtung, die insbesondere ein Datenregister DAR enthält, können die zu übertragenden Daten zwischengespeichert werden und eventuell einer Bearbeitung unterzogen werden. Z.B. kann der Inhalt des Datenregisters DAR mit dem Inhalt eines Vergleichsregisters VGR vergleichen werden, und zwar in der Vergleichseinrichtung VG und nur bei Ungleichheit der Inhalt des Datenregisters zum Datenempfänger weiter übertragen werden. Die Dateneinheit DU arbeitet bei Lesebefehlen gleichzeitig mit der zweiten Mikrobefehlsregistereinheit MBE2, von der sie in diesem Fall auch die notwendigen Steuerinformationen erhält. Bei Schreibbefehlen erhält die Dateneinheit DU die Steuerinformationen vom Mikrobefehlsregister MBR1. In dem Augenblick, in dem die zweiten Mikrobefehlsregistereinheit MBE2 einen neuen Mikrobefehl übernimmt, der einem anderen Kanal zugeordnet sein kann, erfüllt die Dateneinheit DU wiederum andere Aufgaben.

Die Verbindung zum externen Bus BU stellt die Schnittstellenschaltung BEU her. Diese enthält zunächste eine Adressenpufferschaltung PS1, die auf den externen Adreßbus AB zu übertragende Adressen aus den Adressenregistern ADR zwischenspeichert und eventuell modifiziert bzw. die vom externen Adreßbus AB anliegenden Adressen zwischenspeichert und zu einem internen Adreßbus weitergibt.

In der Schnittstellenschaltung BEU ist weiterhin eine Datenpufferschaltung PS2 vorgesehen, die mit dem externen Datenbus DB verbunden ist. In der Datenpufferschaltung PS2 wird entweder ein zum externen Datenbus DB zur übertragendes Datum oder vom externen Datenbus DB geliefertes Datum zwischengespeichert. Die Tätigkeit sowohl der Adreßpufferschaltung PS1 als auch der Datenpufferschaltung PS2 wird von jeweils einem Mikrobefehl gesteuert, so daß nach der diesem Mikrobefehl zugeordneten Tätigkeit jeweils die einem anderen Mikrobefehl zugeordnete Tätigkeit ausgeführt wird. Somit können diese Schaltungen nach der Bearbeitung des aktuellen Mikrobefehls für den nächsten, einem Kanal zugeordneten Mikrobefehl tätig werden.

In der Schnittstellenschaltung BEU ist weiterhin eine Anpassungsschaltung ANS vorgesehen, die an den externen Steuerbus SB angeschlossen ist, und über die ein Austausch von Steuersignalen mit an den externen Steuerbus SB angeschlossenen anderen Einheiten erfolgt.

Schließlich enthält die Schnittstellenschaltung BEU noch einen Taktgenerator TG, dem der externe Takt oder Systemtakt CL zugeführt wird und der aus dem externen Takt CL die zum Betrieb der Einheiten der DMA Steuereinrichtung erforderlichen internen Takte erzeugt.

Die DMA Steuereinrichtung enthält schließlich noch eine Bytezählereinheit BZ, in der die Anzahl der mit Hilfe eines Transferbefehls zu übertragen-

den Daten bzw. deren Byteanzahl gespeichert ist. Immer wenn ein Byte übertragen wird, wird der in der Bytezählereinheit enthaltene Zähler um eine Einheit verringert. Die Bytezählereinheit BZ arbeitet gleichzeitig mit der ersten Mikrobefehlsregistereinheit MBE1.

Die einzelnen Einheiten der DMA Steuereinrichtung sind über einen internen Datenbus ID und einen internen Steuer/Adreßbus miteinander verbunden. In Figur 2 ist dabei nur der interne Datenbus ID gezeigt.

Die einzelnen Einheiten der DMA Steuerung nach Figure 2 sind so aufgebaut, daß sie simultan die von einem aktuellen Mikrobefehl zu erfüllenden Aufgaben ausführen oder die verschiedenen Mikrobefehlen zugeordneten Aufgaben simultan erfüllen. Dabei ist nach jedem Mikrobefehl ein Wechsel zu einem nächsten Mikrobefehl möglich, der einem einem anderen Kanal zugeordneten Mikroprogramm angehört.

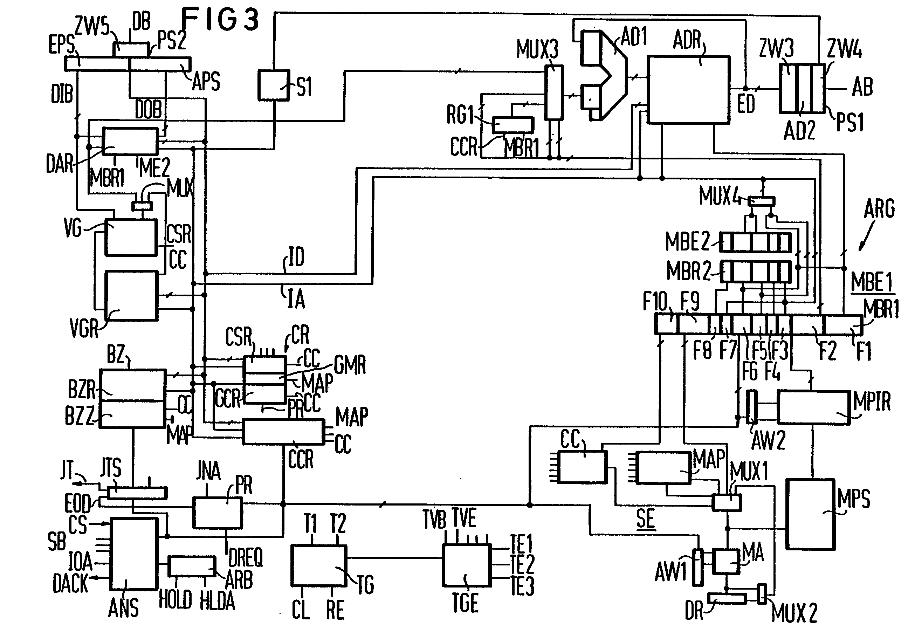

Ein ausführlicheres Schaltbild der DMA Steuereinrichtung ergibt sich aus Figur 3. Zunächst soll der Aufbau der zentralen Steuereinheit CCU erläutert werden. Diese enthält zunächst einen Sequencer SE bekannten Aufbaus. Er besteht aus einem Bedingungsmultiplexer CC, einem Befehlsdecoder MAP, einem ersten Multiplexer MUX1, einem Mikroadressenregister MA, einem Adreßaddierer DR und einem zweiten Multiplexer MUX2. Der Sequencer SE erzeugt aus einem Kanalbefehl bzw. einem Start/Stopbefehl mit Hilfe des Befehlsdecoders MAP die Startadresse des Mikroprogramms, das zur Ausführung des Befehls erforderlich ist. Diese Mikroprogramme stehen im Mikroprogrammspeicher MPS. Der Mikroprogrammspeicher MPS ist mit einem Mikrobefehlszwischenregister MPIR verbunden, in dem die vom Mikroprogrammspeicher MPS abgegebenen Mikrobefehle zwischengespeichert werden. Sowohl das Mikrobefehlsadressenregister MA als auch das Mikrobefehlszwischenregister MPIR kann aus einer Mehrzahl von Registern bestehen, die der Anzahl der zugeordneten Kanäle entspricht. Mit Hilfe einer Prioritätsschaltung PR kann mit Hilfe der anliegenden Bedienungsanforderungen DREQ oder internen Bearbeitungsanforderungen INA der Kanal ausgewählt werden, über den der nächste Datentransfer erfolgt. Damit wird aber das diesem Kanal zugeordnete Register im Mikrobefehlsadressenregister MA mit Hilfe der Auswahlschaltung AW1 bzw. das dem Kanal zugeordnete Register im Mikrobefehlszwischenregister MPIR mit Hilfe der Auswahlschaltung AW2 angesteuert.

Wenn der Mikrobefehl in das Mikrobefehlszwischenregister MPIR übertragen worden ist, kann der Sequencer SE die Adresse des nächsten Mikrobefehls berechnen und mit Hilfe dieser Adresse dann den nächsten Mikrobefehl im Mikroprogrammspeicher MPS adressieren.

Vom Mikrobefehlszwischenregister MPIR kann der aktuelle Mikrobefehl, also der nächste auszuführende Mikrobefehl, in die Mikrobefehlseinheit MBE1 übernommen werden. Die erste Mikrobefehlsregistereinheit MBE1 besteht aus einem ersten Mikrobefehlsregister MBR1 und einem zweiten Mikrobefehlsregister MBR2. Der im ersten Mikrobefehlsregister MBR1 enthaltene Mikrobefehl enthält bestimmte Teile, die in den Einheiten der DMA Steuereinrichtung verschiedene Funktionen auslösen. Im Teil F1 ist die Adresse des Adressenregisters in der Adresseneinheit AU gespeichert, das gelesen oder beschrieben werden soll. Im Teil F2 ist angegeben, um welche Größe der Inhalt des adressierten Adressenregisters ADR geändert werden soll. Der Teil F3 gibt an, ob ein Datentransfer durchgeführt werden soll oder nur organisatorische Arbeiten zu erfüllen sind. Der Teil F4 gibt an, ob ein Datentransfer zwischen dem Datensender und der DMA Steuereinrichtung oder der DMA Steuereinrichtung und dem Datenempfänger durchgeführt werden soll. Aus dem Teil F5 ergibt sich, in welches Zielregister in der DMA Steuereinrichtung das Lesedatum einzuspeichern ist, der Teil F6 gibt an, welchen Kanal die Prioritätsschaltung PR ausgewählt hat, aus dem Teil F7 kann entnommen werden, ob gelesen oder geschrieben werden soll, aus Teil F8 ergibt sich, ob der Datentransfer byteweise oder wortweise zu erfolgen hat, der Teil F9 und F10 ist dem Sequencer SE zugeordnet, aus diesen Teilen kann entnommen werden, ob vom aktuellen Mikrobefehl zu einem anderen Mikrobefehl gesprungen werden soll bzw. wie der Bedingungsmultiplexer CC oder Befehlsdecoder MAP gesteuert wird.

Der Inhalt des ersten Mikrobefehlsregisters MBR1 wird teilweise in das zweite Mikrobefehlsregister MBR2 über nommen und dort zwischengespeichert. Durch diese Zwischenspeicherung wird es ermöglicht, daß der aktuelle Mikrobefehl zumindest teilweise erhalten bleibt, während der nächste Mikrobefehl aus dem Mikrobefehlszwischenregister MPIR bereits in das erste Mikrobefehlsregister MBR1 übernommen wird.

Der aktuelle Mikrobefehl wird anschließend aus dem zweiten Mikrobefehlsregister MBR2 in die zweite Mikrobefehlsregistereinheit MBE2 übernommen und von dort über einen Multiplexer MUX4 an einen internen Adreß/Steuerbus IA angelegt. Über den internen Adreß/Steuerbus IA werden dann die in den Teilen F3 bis F8 des Mikrobefehls enthaltenen Informationen wirksam. Mit Hilfe der zweiten Mikrobefehlsregistereinheit MBE2 wird ermöglicht, daß der nächste Mikrobefehl über das erste Mikrobefehlsregister MBR1 bereits wirksam wird, während der aktuelle Mikrobefehl über die zweite Mikrobefehlsregistereinheit MBE2 am internen Adreß/Steuerbus noch wirksam ist.

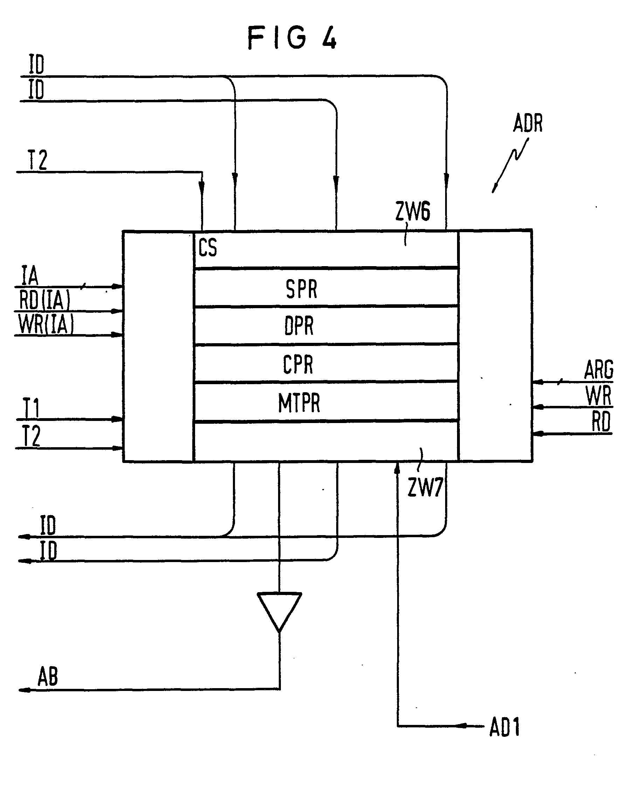

Die Adresseneinheit AU besteht aus einem Adressenregistersatz ADR, einem Adressenaddierer AD1 und einem dritten Multiplexer MUX3. Im Adressenregister ADR, das in Figur 4 ausführlicher gezeigt ist, sind die Adressen für Datensender, Datenempfänger, Kanalbefehl gespeichert. Diese Adressen können am Ausgang ED der Adressenregister ADR abgegeben werden. Sie werden dabei gleichzeitig dem Adressenaddierer AD1 zugeführt, der die neue Adresse berechnet.

Dazu wird dem Adressenaddierer AD1 über den Multiplexer MUX3 die Größe zugeführt, die zu der alten Adresse hinzuaddiert werden muß. Diese Größe ergibt sich, z.B. entweder aus dem Teil F2 des Mikrobefehls oder aus einem Register RG1, oder aus dem Datenregister DAR von der Dateneinheit DU. Der Multiplexer MUX3 wird vom Teil F2 des Mikrobefehls gesteuert. Die neu berechnete Adresse vom Adressenrechner AD1 wird wiederum in das Adressenregister im Adressenregistersatz ADR eingespeichert. Die Auswahl der Adressenregister erfolgt mit Hilfe der Adresse ARG, die im Teil F1 des Mikrobefehls gespeichert ist. Jeder Kanal besitzt seine eigenen Adreßregister. Da Teil F1 des Mikrobefehls im Mikrobefehlsregister MBR1 direkt mit der Adresseneinheit AU verbunden ist, kann die Adresseneinheit AU die ihr vom Mikrobefehl zugeordnete Aufgabe erfüllen, während der Mikrobefehl im ersten Mikrobefehlsregister MBR1 steht.

In die Adressenregister ADR können die vom Adressenrechner AD1 modifizierten Adressen bzw. neue Adressen über den internen Datenbus ID eingespeichert werden. Die Adressen, die die Adressenregister ADR am Ausgang ED ausgeben, können in eine Adressenpufferschaltung PS1 der Schnittstellenschaltung übernommen werden. Diese enthält einen Zwischenspeicher ZW3, einen Adressenaddierer AD2 und einen weiteren Zwischenspeicher ZW4. Mit Hilfe des Adressenrechners AD2, kann bei wortweiser Übertragung, die Adresse entsprechend erhöht werden. Die Adressenpufferschaltung PS1 ist mit dem externen Adreßbus AB verbunden, über den sie in den Adressenregistern ADR gespeicherte Adressen abgeben kann. Sie kann aber auch über den Adreßbus AB Adressen empfangen und im Zwischenspeicher ZW4 zwischenspeichern und von dort über einen Schalter S1 dem internen Adreß/Steuerbus IA zuführen.

Die Schnittstellenschaltung BEU enthält weiterhin die Datenpufferschaltung PS2 bestehend aus einem Zwischenspeicher ZW5, einem Eingangsregister EPS und einem Ausgangsregister APS. Die Datenpufferschaltung PS2 ist mit dem externen Datenbus DB verbunden und zwar mit dem Zwischenspeicher ZW5. Zwischen dem Eingangsregister EPS und dem Ausgangsregister APS ist die Dateneinheit DU angeordnet. In der Datenpufferschaltung PS2 werden bei einem Lesebefehl die von einem Datensender kommenden Daten zwischengespeichert, bevor sie weiter in die Dateneinheit übertragen werden. Umgekehrt werden bei einem Schreibbefehl die von der Dateneinheit DU kommenden Daten in der Datenpufferschaltung zwischengespeichert, bevor sie zum Datenempfänger übertragen werden. Über die Datenpufferschaltung PS2 können weiterhin Adressen, die von der Adreßpufferschaltung PS1 kommen, zum externen Datenbus weitergegeben werden. Schließlich besteht noch eine direkte Verbindung zwischen der Datenpufferschaltung PS2 und den internen Datenbus IS, so daß auch Daten unter Umgehung der Dateneinheit DU direkt in den internen Datenbus ID eingespeist oder von ID übernommen werden können.

Weitere Einheiten der Schnittstellenschaltung BEU sind die Anpassungsschaltung ANS und der Taktgeber TG. Die Anpassungsschaltung ANS ist mit dem externen Steuerbus SB verbunden und erhält über diesen Steuerinformationen z.B. vom Mikroprozessor MP. Weiterhin gibt die Anpassungsschaltung ANS Steuerinformationen an den Steuerbus SB ab, die z.B. zum Datensender oder Datenempfänger führen und diesen mitteilen, ob gelesen oder geschrieben werden soll usw.. Mit der Anpassungsschaltung ANS ist ein Busarbiter ARB verbunden, mit dessen Hilfe der Buszugriff der DMA Steuereinrichtung gesteuert wird. Von diesem Busarbiter ARB werden Busanforderungssignale HOLD abgegeben sowie Quittungssignale HLDA entgegengenommen (siehe Figur 1). Der Schnittstellenschaltung BEU kann auch noch eine Schaltungsanordnung ITS zur Erzeugung oder zur Entgegennahme von Unterbrechungsanforderungen EOD bzw. IT zugeordnet werden. Diese Schaltungsanordnung ITS ist mit dem Sequencer SE verbunden, um diesem mitzuteilen, wenn eine externe Unterbrechungsanforderung vorliegt. Sie ist weiterhin mit dem Kontrollregistersatz CR verbunden, und zwar mit einem Register für das Kanalbefehlswort, aus dem sich ergibt, ob die Schaltungsanordnung ITS eine Unterbrechungsanforderung abgeben soll. Ein Fall, in dem eine Unterbrechungsanforderung abgegeben werden kann, ist dann erreicht, wenn die Bytezählereinheit BZ anzeigt, daß die einem Transferbefehl zugeordnete Anzahl von Daten übertragen worden ist. Aus diesem Grunde ist die Bytezählereinheit BZ ebenfalls mit der Schaltungsanordnung ITS verbunden. Durch den Taktgenerator TG werden aus dem externen Takt CL interne Takt T1 und T2 erzeugt. Mit Hilfe eines weiteren Taktgenerator TGE können noch weitere zum Betrieb der DMA Steuereinrichtung erforderliche Takt erzeugt werden, z.B. können mit diesem Taktgenerator TGE die im externen Bus BU auftretenden Takte erzeugt werden, um eine Anpassung der internen Takt an die Takte im externen Bus BU zu erreichen.

Die Dateneinheit DU, die im wesentlichen aus einem Datenregister DAR besteht, ist mit der Datenpufferschaltung PS2 und mit dem internen Datenbus ID und internen Adreß-/Steuerbus IA verbunden. Die Dateneinheit DU wird bei Lesebefehlen durch den Inhalt der zweiten Mikrobefehlsregistereinheit MBE2 gesteuert, und kann also tätig sein, wenn der aktuelle Mikrobefehl in dieser zweiten Mikrobefehlssteuereinheit MBE2 gespeichert ist. In dem Zeitraum, in dem der aktuelle Mikrobefehl in der zweiten Mikrobefehlsregistereinheit MBE2 steht, können somit Daten in das Datenregister DAR eingespeichert werden und in der Dateneinheit DU z.B. Vergleichsoperationen unterzogen werden.

In der Dateneinheit DU sind weiterhin Einheiten enthalten, in denen die gelesenen Daten z.B.

durch Vergleich mit gespeicherten Daten überprüft werden können. Dazu enthält die Dateneinheit DU ein Vergleichsregister VGR, in denen die Sollwerte gespeichert sind und eine Vergleichseinrichtung VG, in der die Sollwerte mit den über die Datenpufferschaltung PS2 zugeführten Istwerten verglichen werden. Tritt z.B. Gleichheit auf, wird ein Signal an den Sequencer SE, und zwar an den Bedingungsmultiplexer CC, abgegeben. Die Vergleichseinrichtung VG ist ebenfalls dann tätig, wenn der aktuelle Mikrobefehl in der zweiten Mikrobefehlsregistereinheit MBE2 steht, da der Vergleich immer mit Lesedaten durchgeführt wird.

Die Bytezähler/einheit BZ besteht aus einem Register BZR und einem Zähler BZZ. In das Register BZR wird die Anzahl der zu übertragenden Bytes pro Transferbefehl eingespeichert. Mit Hilfe des Zählers BZZ wird die Anzahl der übertragenen Bytes pro Transferbefehl gezählt. Ist die gewünschte Anzahl übertragen worden, gibt die Bytezählereinheit BZ ein Signal an den Sequencer SE und zur Schaltungsanordnung ITS zur Erzeugung einer Unterbrechungsanforderung.

Der Kontrollregistersatz CR, der ebenfalls in den internen Datenbus ID und an den internen Adreß/Steuerbus IA angeschlossen ist, enthält zumindest ein Befehlsregister GCR, ein Modusregister GMR, ein Kanalstatusregister CSR und ein Kanalbefehlsregister CCR. Das Kanalbefehlregister CCR enthält den aktuellen Kanalbefehl, der von dem Sequencer SE auszuführen ist. Aus diesem Grunde ist das Kanalbefehlsregister CCR auch mit dem Sequencer SE verbunden. Das Befehlsregister GCR enthält den Start- bzw. Stoppbefehl, aus dem sich z.B. ergibt, über welchen Kanal oder Unterkanal ein Datentransfer stattfinden soll. Das Befehlsregister GCR ist ebenfalls mit dem Sequencer SE verbunden. Dem Modusregister GMR kann entommen werden, auf welche Weise der Datendtransfer zu erfolgen hat, z.B. ob Multiplexbetrieb stattfinden soll, ob Unterbrechungsanforderungen EOD gestellt werden sollen und welche Priorität die den Datentransfer anfordernde Einheit hat.

Im Kanalstatusregister CSR wird schließlich angegeben, aus welchem Grund der Datentransfer beendet wordenist, also der Status des Kanals am Ende der Datenübertragung angegeben. Sowohl das Modusregister GR als auch das Kanalstatusregister CSR ist mit dem Sequencer SE verbunden. Da die DMA Steuereinrichtung den Datentransfer über mehrere Kanäle (s. Figure 1) steuern muß, denen verschiedene Prioritäten zugeordnet sind, ist es möglich, daß nach der Ausführung eines Transferbefehls bzw. eines Teiles eines Transferbefehls über einen Kanal die nächste Übertragung über einen anderen Kanal erfolgen muß. Um den Wechsel von einem Kanal zu einem anderen Kanal möglichst schnell durchführen zu können, sind eine Mehrzahl der in der DMA Steuereinrichtung angeordneten Register nämlich alle kapal spezifischen Register mehrfach vorgesehen. Damit können Informationen für mehrere Kanäle gleichzeitig in der DMA Steuereinrichtung gespeichert sein. Zu den mehrfach vorgesehenen Registern gehören z.B. das Mikrobefehlsadressenregister MA, das Mikrobefehlszwischenregister MPIR, die Adressenregister ADR, das Datenregister DAR, das Vergleichsregister VGR, das Bytezählerregister BZR, das Kanalstatusregister CSR und das Kanalbefehlsregister CCR. Diese Register enthalten dann für jeden Kanal getrennte Unterregister.

Aus Figure 4 ergibt sich ein genauerer Aufbau des Adressenregisters ADR in der Adresseneinheit AU. Im Adressenregistersatz ADR ist ein Adressenregister CPR zur Aufnahme der Adresse des Kanalbefehls, ein Adressenregister SPR zu Aufnahme der Adresse des Datensenders, ein Adressenregister DPR zur Aufnahme der Adresse des Datenempfängers und ein Adressenregister MTPR zur Aufnahme eines Adreßteils der einem Unterkanal zugeordneten Startadresse für dessen Kanalprogramm enthalten. Den Adressenregistern ist ein Eingangszwischenregister ZW6 vorgeschaltet und am Ausgang ein Zwischenregister ZW7 nachgeschaltet. Die Ansteuerung der Adressenregister zum Schreiben oder zum Lesen erfolgt über Steuersignale vom internen Adreß- und Steuerbus IA in Abhängigkeit von Taktsignalen T1 und T2 vom Taktgenerator TG. Die Adresse des zu beschreibenden oder zu lesenden Adreßregisters wird dem ersten Mikrobefehlsregister MBR1 entnommen und an den Registersatz ADR angelegt. Diese Adresse ist in Figure 3 und 4 mit ARG bezeichnet.

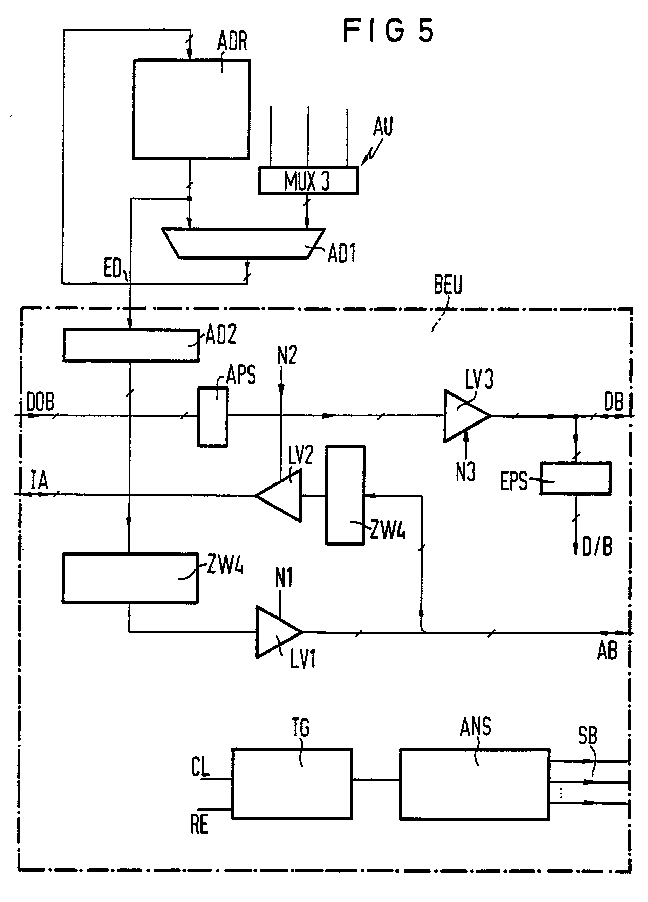

Ein ausführlicheres Beispiel der Schnittstellenschaltung BEU ergibt sich aus Figur 5. Dort ist zunächst die Adresseneinheit AU noch einmal dargestellt mit den bereits oben beschriebenen Teilen. Der Ausgang ED der Adresseneinheit AU führt zu dem Adressenrechner AD2 und von dort zum Zwischenspeicher ZW4. Über einen Leitungsverstärker LV1 wird dann die Adresse zum externen Adreßbus AB weitergegeben. Der Leitungsverstärker LV1 kann mit Hilfe eines Signals N1 abgeschaltet werden. Dies ist erforderlich, wenn vom externen Adreßbus AB an die Schnittstellenschaltung Adressen angelegt werden. Diese werden dann in einen anderen Teil des Zwischenspeichers ZW4 eingespeichert und gelangen von dort über einen Leitungsverstärker LV2 zum internen Adreß/Steuerbus IA. Der Leitungsverstärker LV2 kann ebenfalls abgeschaltet werden. Dies geschieht mit Hilfe eines Signals N2. Vom externen Datenbus DB ankommende Daten werden über einen internen Bus DIB zum Datenregister DAR geführt. Vom Datenregister DAR auszugebende Daten werden über einen internen Bus DOB zum Ausgangszwischenregister APS übertragen und gelangen von dort über den Leitungsverstärker LV3 zum externen Datenbus DB. Der Leitungsverstärker LV3 ist ebenfalls mit Hilfe eines Signals N3 abschaltbar. Die Schnittstellenschaltung enthält schließlich, wie bereits in Figur 3 gezeigt, einen Taktgenerator TG und die Anpassungsschaltung ANS. Von der Anpassungsschaltung ANS gehen dann Steuersignale zum Steuerbus SB.

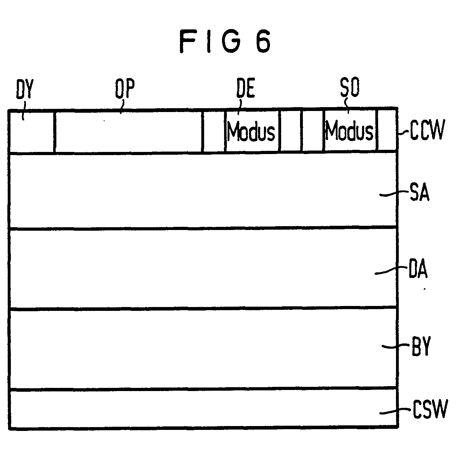

Der Datentransfer vom Datensender zum Datenempfänger erfolgt in Abhängigkeit eines Kanalprogramms, der Transferbefehle zur Steuerung des Datentransfers und Steuerbefehle zur Ausführung von organisatorischen Operationen enthält. Die Kanalprogramme können z.B. im Speicher MM gespeichert sein und können dort vom Mikroprozessor MP modifiziert werden. Den Aufbau eines derartigen Kanalbefehls zeigt Figur 6. Der Kanalbefehl besteht aus dem Kanalbefehlswort CCW, der Datensenderadresse SA, der Datenempfängeradresse DA, der Anzahl der zu übertragenden Bytes BY und dem Kanalstatuswort CSW. Das Kanalbefehlswort CCE enthält verschiedene Bestandteile. Im ersten Bestandteil DY ist angegeben, ob ein Transferbefehl oder ein Steuerbefehl ausgeführt wird.

In einem zweiten Bestandteil wird der Operationscode OP angegeben, aus dem sich ergibt, ob z.B. eine Verzweigung im Kanalprogramm ausgeführt werden soll oder ein Stopbefehl vorliegt oder ob externe Unterbrechungsanforderungen ausgewertet werden sollen oder nicht. Im einem dritten Bestandteil DE sind Angaben enthalten, wie die Datenempfängeradresse zu modifizieren ist (Modus), ob jeweils ein Byte oder ein Wort übertragen wird und in welcher Richtung die Datenübertragung erfolgen soll. Der Bestandteil SO gibt an, ob die Datensenderadresse zu modifizieren ist, ob jeweils Bytes oder Datenworte zu übertragen sind und welche Richtung die Datenübertragung nimmt. In das Kanalstatuswort CSW wird aufgenommen, in welchem Zustand der Kanal nach Abschluß des Kanalbefehls ist.

Im folgenden wird die Arbeitsweise der DMA Steuereinrichtung erläutert. Dabei wird angenommen, daß die DMA Steuereinrichtung den Datentransfer zwischen einem Sender und einem Empfänger im Selektorbetrieb durchführt. Bevor die DMA Steuereinrichtung zu arbeiten beginnt, wird sie mit Hilfe eines Resetsignals RE in ihren Ausgangszustand zurückgesetzt. Ein entsprechendes Signal wird z.B. von Mikroprozessor MP abgegeben. Der Mikroprozessor MP lädt weiterhin das Modusregister GMR, das Befehlsregister GCR mit dem Startbefehl und das Adressenregister CPR im Adressenregistersatz ADR mit der Adresse des ersten Kanalbefehls. Das zugeordnete Kanalprogramm soll im Speicher MM stehen.

Mit diesen Informationen kam die DMA Steuereinrichtung die Bearbeitung des Kanalprogramms beginnen. Dazu steuert der Sequencer SE in Abhängigkeit des Befehls im Befehlsregister GCR das entsprechende Mikroprogramm im Mikroprogrammspeicher MPS an, von dem Mikrobefehl um Mikrobefehl über das Mikrobefehlszwischenregister MPIR zu den Mikrobefehlsregistereinheiten MBE1 und MBE2 übertragen werden und dann ausgeführt werden. Dabei wird zunächst das Kanalstatusregister CSR zurückgesetzt, anschließend der erste Kanalbefehl, dessen Speicheradresse im Adressenregister CPR steht in das Kanalbefehlsregister CCR übernommen. Sollte der Kanalbefehl ein reiner Steuerbefehl sein, dann wird dieser Kanalbefehl ausgeführt.

Dazu steuert der Sequencer SE mit Hilfe seines Befehlsdecoders MAP, der mit dem Kanalbefehlsregister CCR verbunden ist, das zugeordnete Mikroprogramm im Mikroprogrammspeicher MPS an. Liegt jedoch ein Transferbefehl vor, dann wird von der DMA Steuereinrichtung zunächst das Adressenregister SPR, in dem die Adresse des Datensenders enthalten ist, geladen. Diese Adresse steht im Kanalbefehl und wird mit Hilfe der Adresse im Adressenregister CPR gewonnen. Anschließend wird das Adressenregister DPR, in dem die Adresse des Datenempfängers enthalten ist, geladen. Diese Adresse ergibt sich ebenfalls aus dem Kanalbefehl, die entsprechende Speicheradresse wird ebenfalls aus dem Adressenregister CPR gewonnen. Damit sind die Register geladen, die für den Datentransfer im Selektorbetrieb erforderlich sind.

Anschließend kann die DMA Steuereinrichtung den Transferbefehl ausführen. Das entsprechende Kanalbefehlswort steht im Kanalbefehlsregister CCR. Aus dem Kanalbefehlswort entwickelt der Sequencer mit Hilfe des Befehlsdecoders MAP die Adresse des Mikroprogramms im Mikroprogrammspeicher MPS, der diesem Befehlswort zugeordnet ist. Mit Hilfe der in diesem Mikroprogramm enthaltenen Mikrobefehle, die in die Mikrobefehlsregistereinheiten MBE1 und MBE2 übertragen werden, werden dann die zum Datentransfer erforderlichen Schritte ausgeführt. Der Verkehr mit dem Datensender und dem Datenempfänger erfolgt auf übliche bekannte Art über Unterbrechungsanforderungen DREG und Quittungssignalen DACK. Das heißt, wenn der Datenempfänger oder Datensender zur übertragung bereit ist, gibt er eine Bedienungsanforderung DREQ an die Prioritätsschaltung PR, die unter mehreren Anforderungen die Höchstpriore auswählt und dementsprechend die einzelnen Register in der DMA Steuereinrichtung einstellt.

Über den ausgewählten Kanal erfolgt dann der Datentransfer Dazu wird das zu übertragende Datum vom Datensender in die DMA-Steuereinrichtung und zwar in das Datenregister DAR übertragen und anschließend vom Datenregister DAR zum Datenempfänger weitergegeben.

Da die Übertragung der Daten zwischen Datensender und Datenempfänger mit möglichst hoher Geschwindigkeit erfolgen soll, wobei noch zu berücksichtigen ist, daß nach jedem Datentransfer (Schreiben oder Lesen) ein Kanalwechsel möglich ist, müssen die einzelnen Einheiten der DMA-Steuereinrichtung möglichst unabhängig voneinander arbeiten. Dabei muß beachtet werden, daß die DMA-Steuereinrichtung eine Reihe von Schritten durchführen muß, bevor ein eigentlicher Datentransfer möglich ist. Solche vorbereitende Schritte sind z.B.: Es müssen die Bedienungsanforderungen DREQ mit Hilfe der Prioritätsschaltung PR ausgewertet werden; der Sequencer SE muß den zugehörigen aktuellen Mikrobefehl aus dem Mikroprogrammspeicher MPS lesen; der aktuelle Mikrobefehl muß in das erste Mikrobefehlsregister MBR 1 übertragen werden; der Mikrobefehl muß ausgeführt werden, d.h. das entsprechende Adreßregister ADR muß gelesen werden und an die Schnittstellenschaltung BEU übergeben werden. Erst jetzt kann mit dem Datentransfer über den externen Bus begonnen werden. Nach Abschluß des Datentransfers über den externen Bus muß das gelesene Datum noch in das Zielregister, z.B. das Datenregister DAR, gebracht werden, eventuell Vergleichsoperationen mit dem übertragenen Datum durchgeführt werden und daraus möglicherweise eine Folgebehandlung abgeleitet werden. Alle diese Schritte werden von dem aktuellen Mikrobefehl in den Mikrobefehlsregistereinheiten MBE gesteuert.

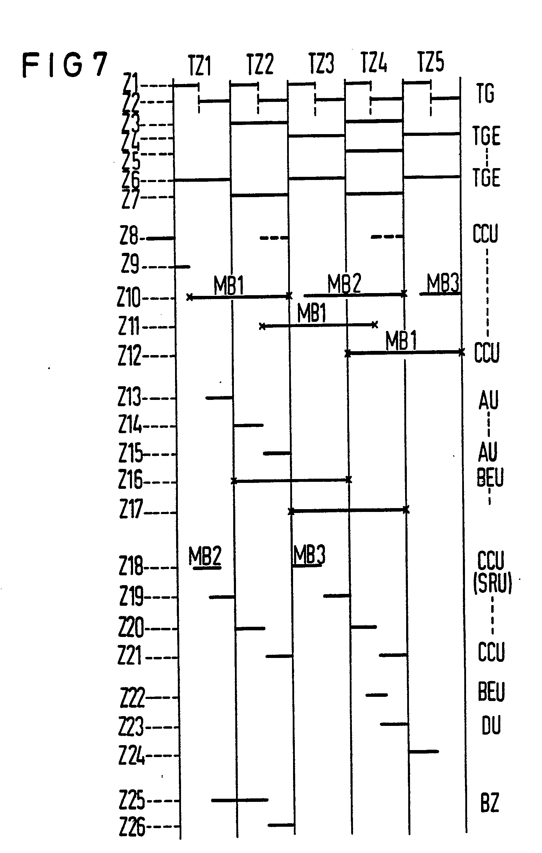

Soll trotz dieser Vielzahl von Schritten bei der Ausführung eines Datentransfers mit hoher Geschwindigkeit Daten zwischen Datensender und Datenempfänger übertragen werden, dann müssen die einzelnen Mikrobefehle, die zur Steuerung der Datentransfers erforderlich sind, überlappend angesteuert und ausgeführt werden. Dieses überlappende Ansteuern und Ausführen der Mikrobefehle wird anhand des Zeitdiagramms der Fig. 7 erläutert.

Nach Fig. 7 ist das Zeitdiagramm in einzelne Taktzyklen TZ1 bis TZ5 unterteilt. Diese Taktzyklen TZ gewinnt man mit Hilfe von Taktsignalen, die von den Taktgeneratoren TG und TGE abgegeben werden. Der Taktgenerator TG erzeugt z.B. die internen Takte T1, T2, der Taktgenerator TGE die Taktsignale TVB und TVE. Zur Anpassung der internen Taktsignale an die Taktsignale des externen Busses können von dem Taktgenerator TGE noch zusätzlich die Takte TE1, TE2 und TE3 erzeugt werden. Diese verschiedenen Taktsignale sind erforderlich, da einige Einheiten der DMA-Steuereinrichtung über mehrere Taktzyklen TZ für einen einzigen Mikrobefehl tätig sind, jedoch parallel dazu und mit anderen Zeitverhältnissen auch andere Einheiten für denselben Mikrobefehl oder für einen anderen Mikrobefehl wirksam sind.

Das Taktsignal T1 ist in Fig. 7 in Zeile Z1, das Taktsignal T2 in Zeile Z2, das Taktsignal TE1 in Zeile Z3, das Taktsignal TE2 in Zeile Z4, das Taktsignal TE3 in Zeile Z5, das Taktsignal TVB in Zeile Z6 und das Taktsignal TVE in Zeile Z7 dargestellt.

Bevor mit dem Datentransfer begonnen werden kann, wird durch die Prioritätsschaltung PR festgestellt, über welchen Kanal übertragen werden soll. Die Tätigkeit der Prioritätsschaltung PR, die in Zeile Z8 gezeigt ist, liegt für einen auszuführenden aktuellen Mikrobefehl somit vor dem Taktzyklus TZ1. Für weitere Mikrobefehle ist die Zeit, in der die Prioritätsschaltung PR tätig ist in Fig. 7 gestrichelt dargestellt.

Für die weitere Beschreibung wird vorausgesetzt, daß der aktuelle Mikrobefehl, in Fig. 7 mit MB1 bezeichnet, bereits im Mikrobefehlszwischenregister MPIR steht. D.h. die Adressierung und Ausspeicherung dieses aktuellen Mikrobefehls MB1 durch die Einheit SRU ist bereits vor dem Taktzyklus TZ1 erfolgt.

Im Taktzyklus TZ1 wird nun der aktuelle Mikrobefehl MB1 in das erste Mikrobefehlsregister MBR1 übertragen (Zeile Z9), der Mikrobefehl MB1 ist dann, wie Zeile Z10 zeigt, während des Restes des Taktzyklus TZ1 und während des Taktzyklus TZ2 im ersten Mikrobefehlsregister MBR1 wirksam. Mit Beginn des Takes T2 während des zweiten Taktzyklus TZ2 wird der Mikrobefehl MB1 in das zweite Mikrobefehlsregister MBR2 übernommen und ist dort bis zur Beendigung des Taktes T1 im vierten Taktzyklus TZ4 gespeichert. Nach dem der aktuelle Mikrobefehl MB1 in das zweite Mikrobefehlsregister MBR2 übernommen worden ist. (Zeile Z11) kann in das erste Mikrobefehlsregister MBR1 bereits der nächste Mikrobefehl MB2 übernommen werden. Vom zweiten Mikrobefehlsregister MBR2 wird der aktuelle Mikrobefehl MB1 anschließend in die zweite Mikrobefehlsregistereinheit MBE2 übernommen (Zeile Z12) Dort ist er während der Taktzyklen TZ4 und TZ5 gespeichert. Nach Übertragung des Mikrobefehles MB1 in die zweite Mikrobefehlsregistereinheit ME2 kann in das zweite Mikrobefehlsregister MBR2 der nächste Mikrobefehl MB2 übernommen werden. Wie Fig. 7 zeigt, ist somit ein Mikrobefehl, z.B. der Mikrobefehl MB1 über mehrere Taktzyklen, in Fig. 7 über 5 Taktzyklen, wirksam entweder von ersten Mikrobefehlsregister MBR1 oder von der zweiten Mikrobefehlsregistereinheit MBE2 aus. Es ist aber auch zu sehen, daß gleichzeitig zwei Mikrobefehle MB wirksam sein können, der eine vom ersten Mikrobefehlsregister MBR1 aus, der zweite von der zweiten Mikrobefehlsregistereinheit MBE2 aus.

Solange der aktuelle Mikrobefehl MB1 im ersten Mikrobefehlsregister MBR1 steht, kann er die Adresseneinheit AU beeinflussen, da direkte Verbindungen zwischen dem ersten Mikrobefehlsregister MBR1 und der Adresseneinheit AU bestehen. Dementsprechend wird entsprechend Zeile Z13 das über die Adresse ARG adressierte Adressenregister gelesen und zur Adreßpufferschaltung PS1 übergeben (Takt T2) im Taktzyklus TZ1), durch den Adreßrechner AD1 gemäß Zeile Z14 die neue Adresse berechnet (Takt T1 im Taktzyklus TZ2) und gemäß zeile Z15 die neue Adresse in das Adreßregister zurückgeschrieben (Takt T2 im Taktzyklus TZ2). Mit Beginn des Taktzyklus TZ2 steht dann auch die vom Adreßregister ADR ausgeeebene Adresse der Schnittstellenschaltung zur Verfügung und kann von dieser auf den externen Adreßbus AB ausgegeben werden (Taktzyklus TZ2 und TZ3). Sollte ein Schreibbefehl vorliegen, wie in Zeile Z17 gezeigt, dann wird während der Taktzyklen TZ3 und TZ4 das Schreibdatum auf den Datenbus DB gegeben. Auch dies geschieht durch die Schnittstellenschaltung BEU.

Soll nach Ausgabe des Adresse (Zeile Z16) dagegen ein Lesebefehl ausgeführt werden, dann wird wie Zeile Z22 zeigt, im Taktzyklus TZ4 während des Taktsignales T1 das Lesedatum in die Datenpufferschaltung PS2 übernommen und nach Zeile Z23 das Lesedatum während des Taktes T2 des Taktzyklus TZ4 zur Dateneinheit DU weitergegeben. Dort kann es bearbeitet werden, z.B. in der Vergleichsschaltung VG mit einem Sollwert verglichen werden und nach der Bearbeitung im Zielregister während des Taktes T1 des Taktzyklus TZ5 gespeichert werden (Zeile (Z24).

Während der aktuelle Mikrobefehl MB1 im ersten Mikrobefehlsregister MBR1 gespeichert ist, wird vom Sequencer SE die Adresse des nächsten Mikrobefehles berechnet. Während des taktes T2 des Taktzyklus TZ1 wird nach Zeile Z18 die neue Mikrobefehlsadresse errechnet, und nach Zeile Z19 während des Taktsignales T2 des Taktzyklus TZ1 im Mikroadressenregister MA zwischengespeichert. Nach Zeile Z20 wird während des Taktes T1 des Taktzyklus TZ2 der zugeordnete Mikrobefehl aus dem Mikroprogrammspeicher MPS gelesen und während des Taktes T2 Taktzyklus TZ2 in das Mikrobefehlszwischenregister MPIR zwischengespeichert. (Zeile Z21). Anschließend kann der Sequencer SE mit der Vorbereitung des nächsten Mikrobefehles, des Mikrobefehles MB3 beginnen.

In den Zeilen Z25 und Z26 ist noch die Tätigkeit der Bytezählereinheit BZ gezeigt. Während der Taktzyklen TZ1 und TZ2 wird die Byteanzahl aus dem Register BZR gelesen und in Zähler BZZ geändert (Zeile Z25) und anschließend (Zeile Z26) in das Register BZR zurückgeschrieben.

Das Diagramm der Fig. 7 zeigt deutlich, daß die Adresseneinheit AU tätig ist, während der Mikrobefehl im ersten Mikrobefehlsregister MBR1 steht. Die Dateneinheit DU und die Datenpufferschaltung PS2 ist dagegen wirksam, während der Mikrobefehl in der zweiten Mikrobefehlsregistereinheit MBE2 gespeichert ist. Dabei arbeiten die Adresseneinheit Au und die Dateneinheit DU unabhängig voneinander. Simultan dazu ist die Mikroprogrammeinheit SUR tätig, sie berechnet die Adresse des nächsten Mikrobefehles, gibt diesen aus und überträgt ihn in das Mikrobefehlszwischenregister MPIR. Die Einheiten der DMA-Steuereinrichtung sind somit gleichzeitig für verschiedene Mikrobefehle MB tätig, wobei diese verschiedenen Mikrobefehle selbstverständlich Mikroprogrammen verschiedener Kanäle zugeordnet sein können.

Zur Bearbeitung eines Mikrobefehles, durch den die Übertragung eines Datums gesteuert wird, sind nach Fig. 7 5 Taktzyklen erforderlich. Wenn die Berechnung der Adresse des Mikrobefehles noch hinzugenommen wird, sind sieben Taktzyklen TZ notwendig. Durch die überlappende Tätigkeit der einzelnen Einheiten der DMA-Steuereinrichtung kann jedoch alle zwei Taktzyklen TZ eine neue Datteübertragung über den Bus (Buzyklus) begonnen werden. 18 Patentansprüche/7 Figuren.

**Patentansprüche**

1. DMA-Steuereinrichtung zur Übertragung von Daten zwischen einem Datensender und einem Datenempfänger über einen aus einem Datenbus, Adreßbus und Steuerbus bestehenden externen Bus, an den eine Mehrzahl von Datensendern/ Empfängern und mindestens ein Mikroprozessor angeschlossen sind und bei der die Übertragung in Abhängiket von einem Kanaltransferbefehle und Kanalsteuerbefehle enthaltenden Kanalprogramm erfolgt, wobei eine zentrale Steuereinheit (CCU), eine Adresseneinheit (AU), eine Dateneinheit (DU) eine Bytezählereinheit (BZ), eine Busschnittstellenschaltung (BEU) und ein Steuerregistersatz (CR) vorgesehen sind, dadurch gekennzeichnet, daß die zentrale Steuereinheit (CU) in Abhängigkeit von einem Kanalbefehl einen Mikrobefehl eines dem Kanalbefehl zugeordneten Mikroprogramms adressiert und damit den Mikrobefehl entsprechende Adreß- und Steuersignale an einen internen Adreß/Steuerbus (IA) anlegt, daß die Adresseneinheit (AU) an den internen Adreß/Steuerbus (IA) und an einen internen Datenbus (ID) angeschlossen ist, die Adressen des Datensenders, Datenempfängers und des Kanalprogramms speichert und eine im Mikrobefehl angesprochene Adresse am Ausgang (ED) abgibt und gleichzeitig die neue Adresse berechnet und einspeichert, daß in der Dateneinheit (DU) die zu übertragenden Daten zwischengespeichert und eventuell Vergleichsoperationen durchgeführt werden und daß diese Dateneinheit (DU) an den internen Adreß/Steuerbus (IA) und an den internen Datenbus (ID) angeschlossen ist, daß die Bytezählereinheit (BZ) an den internen Datenbus (ID) und Adreß/Steuerbus (IA) angeschlossen ist und die Anzahl der zu übertragenden Bytes bei einem Transferbefehl zählt und bei Erreichen der gewünschten Anzahl ein Signal an die zentrale Steuereinheit (CCU) gibt, daß die Busschnittstellenschaltung (BEU) mit dem Ausgang der Adresseneinheit (AD), mit dem externen Adreßbus (AD) und mit dem internen Adreß/Steuerbus (IA) verbunden ist und an den externen Datenbus (DB) zur Übertragung der Daten zu/von der Dateneinheit (DU) angeschlossen ist, daß der Steuerregistersatz (CR) mit dem internen Datenbus (ID) und Adreß/Steuerbus (IA) zur Aufnahme von Kanalbefehlswort, Statusworten und anderen Steuerinformationen verbunden ist und von dem Steuerregistersatz (CR) Leitungen zur Übertragung von Steuersignalen zu der zentralen Steuereinheit (CCU) führen und daß die Einheiten so ausgeführt sind, daß sie die ihnen übertragenen Aufgaben selbständig ausführen.

2. Steuereinrichtung nach Anspruch 1, gekennzeichnet durch die zentrale Steuereinheit (CCU) bestehend aus einer Mikroprogrammeinheit (SRU) mit einem Sequencer (SE), mit einem mit dem Sequencer verbundenen Mikroprogrammspeicher (MPS) zur Aufnahme der den Kanalbefehlen zugeordneten Mikroprogramme und mit einem mit dem Mikroprogrammspeicher verbundenen Mikrobefehlszwischenregister (MPIR), aus einer ersten Mikrobefehlsregistereinheit (MBE1) mit einem mit dem Mikrobefehlszwischenregister (MPIR) verbundenen ersten Mikrobefehlsregister (MBR1), das an den internen Adreß/Steuerbus (IA) an de Adresseneinheit (AU) rund an den Sequencer (SE) angeschlossen ist und mit einem mit dem ersten Mikrobefehlsregister verbundenen zweiten Mikrobefehlsregister (MBR2), und aus einer zweiten Mikrobefehlsregistereinheit (MBE2), die mit dem zweiten Mikrobefehlsregister verbunden ist und die an den internen Adreß/Steuerbus (IA) angeschlossen ist.

3. Steuereinrichtung nach Anspruch 1 oder 2, gekennzeichnet durch die Adresseneinheit (AU) bestehend aus einem Adressenregistersatz (ADR) zur Speicherung der Datensender-, Datenempfänger- und Kanalprogrammadressen, der mit dem internen Adreß/Steuerbus (IA) zur Übernahme der Adressee eines zu ladenden Adressenregisters und mit dem internen Datenbus (ID) zur Übernahme des zu ladenden Inhaltee des adressierten Adressenregisters verbunden ist und der an das erste Mikrobefehlsregister (MBR1) zur Übberahme der Adress (ARG) desjenigen Adressenregisters angeschlossen ist, dessen Inhalt an den Ausggng (ED) zur Schnittstellenschaltung (BEU) übertragen wird, und aus einem Adreßrechner (AD1), dessen Ausgang mit dem Eingang des Adressenregistersatzes (ADR) verbunden ist, dessen einer Eingang mit dem Ausgang (ED) des Adressenregistersatzes und dessen anderer Eingang mit einem Multiplexer (MUX3) verbunden ist, über den die zu der aus dem Adressenregister ausgegebenen Adresse hinzuzureehnende Größe zugeführt wird.

4. teuereenrichtung nach einem der vorhergehenden Ansprüche, gekennzeichnet, durch die Schnittstellenschaltung (BEU) bestehend aus einer Adressenpufferschaltung (PS1), die am Ausgang der Adresseneinheit (AU) angeschaltee ist und die mit dem externen Adreßbus (AB) und über einen Schalter (S1) mit dem internen Adreß/Steuerbus (IA) verbunden ist, aus einer Datenpufferschaltung (PS2), die mit dem externen Datenbus (DB) uber ein Eingangsregister (EPS) und Ausgangsregister (APS) verbunden ist und aus einem Taktegenerator (TG), der aus einem externen Takt (CL) die zur Zusammenarbbit der Einheiten erforderlichen Taktsignale (T1, T2) erzeugt.

5. Steuereinrichtung nach Anspruch 4, gekennzeichnet durch die Dateneinheit (DU) bestehend aus einem Datenregister (DAR), das zwischen dem Eingangsregister (EPS) und dem Ausgangsregister (APS) der Schnittstellenschaltung angeordnet ist und das mit dem internen Datenbus (ID) und Adreß/Steuerrbs (IA) verbunden ist.

6. Steuereinrichtung nach einem der vorhergehenden Ansprüche gekennzeichnet durch den Steuerregistersatz (CR), bestehend aus einem mit dem Sequencer (SE) verbundenen Kanaastatusregister (CSR), in dem der Status der Kanäle nach Beendigung der Datentransfer eines Transferbefehls gespeichert ist, aus einem Befehlsregister (GCR), in dem der Start/Stopbefehl gespeichert ist, aus einem Modusregister (GMR), in em die Art des Dattetransfers gespeichert ist und aus einem Kanalbefehlsregister (CCR), in dem das Kanalbefehlswort gespeichert ist.

7. Steuereinrichtung nach Anspruch 6, dadurch gekennzeichnet, daß ein Mikroadressenregister (MA) und das Mikrobefehlszwischenregister (MPIR) in der Mikroprogrammeinheit (SRU), die Adressenregister (ADR) in der Adresseneinheit (AU), das Datenregister (DAR) und die Steuerregister (CSR, CCR) entsprechend der Zahl der Übertragungskanäle mehrfach ausgeführt ist und daß in der zentralen Steuereinheit (CCU) eine Prioritätsschaltung (PR) vorgesehen ist, die entsprechend einer Prioritätsentscheidung die einem ausgewählten Kanal zugeordneten Register auswählt.

8. Steuereinrichtung nach einem der vorhergehenden Ansprüche, dadurch gekennzeichnet, daß sie in MOS-Tchnologie in einem Baustein realisiert ist.

9. Verfahren zum Betrieb einer DMA-Steuereinrichtung zur übertragung von Daten zwischen einem Datensender und einem Datenempfänger über einen aus einem Datenbus, Adreßbus und Steuerbus bestehenden externen Bus, an den eine Mehrzahl von Datensendern/Empfängern unddmindestens ein Mikroprozessor angeschlossen sind und bei der die Übertragung in Abhännggkeit von einem kannatransferbefehle unddKanalsteuerbefehle enthaltenden Kanalprogramm erfolgt, wobei eine zentrale Steuereinheit (CCU), eine Adressenninheit (AU), eine Dateneinheit (DU) eine bytezählereinheit (BZ), eine Busschnittssellenschaltung (BEU) nd ein Steuerregistersatz (CR) vorgesehen ssnd wobei die zentrale Steuereinheit (CCU) aas einer Mikroprogrammminheit (SRU) it einem Sequencer ((E), mit einem mit dem Sequencer verbundenen Mikroprogrammspeicher (MPS) zur Aufnahme er den Kanalbefehlen ugeordneten Mikroprogramme und mit einem mit dem Mikroprogrammspeicher verbundenen Mikrobefehlszwischenregister (MPIR), aus einer ersten Mikrobefehlsregistereinheit (MBE1) mit einem mit dem Mikrobefehlszwischenregister (MPIR) verbundenen ersten Mikrobefehlsregister (MMB1), das an den internen Adreß/Steuerbus (IA) an die Adresseneinheit (AU) run an den Sequencer (SE) aageschlossen ist und .mit einem mit dem ersten Mikrobefehlsregister verbundenen zweiten Mikrobefehlsregister (MBR2), und aus einer zweiten Mikrobefehlsregistereinheit (MBE2) beeteht, die mit dem zweiten Mikrobefehlsregistee verbunden ist und die n den internen Adreß/Steuerbus (IA) anggschlossen ist, dadurch gekennzeichnet, daß die Mikroprogrammeinheit (SRU) n Abhängigkeit vom Kanalbefehl im Kanaalefehlsregister (CCR) bzw. von einem Befehl im Befehlsregister (GCR) die Adresse enes ersten Mikrobefeehes (MB1) des dem BBeehl zugeordneten Mikkoprogramms erzeugt und en der Mikrobefehlsaadrsse zugeordneten mikrobefehl in das Mikrobefehlszwischenregistee (MPIR) überträgt und daß dann die MMkroprogrammeinheit dieeMikrobefehlsadresse des nächsten Mikrobefehles (MB2) des Mkroprogramms erzeugt unn diesen Mikrobefehl n das Mikrobefehlszwisshenregister (MPIR) überträgt.

10. Verfahren nach Anspruch 9, dadurch gekennzeichnet, daß die erste Mikrobefehlsregistereinheit (MBE1) nach der Einspeicherung des ersten Mikrobefehles (MB1) in das Mikrobefehlszwischenregister (MPIR) diesen in das erste Mikrobefehlsregister (MBR1) übernimmt und anschließend an das zweite Mikrobefehlsregister (MBR2))weitergibt, während die Mikroprogrammeinheit (SRU) die Adresse des nächsten Mikrobefehles (MB2) erzeugt und diesen in das Mikrobefehlszwischenregister (MPIR) überträgt, und daß dann der nächste Mikrobefehl (MB2) vom Mikrobefehlszwischenregister in das erste Mikrobefehlsregister übertragen wird.

11. Verfahren nach Anspruch 10, dadurch gekennzeichnet, daß die Adresseneinheit (AU) vom ersten Mikrobefehlsregistee (MBR1) die im Mikrobefehl enthaltene Adresse des Adressenregister (ADR) erhält, dessen Inhalt am Ausgang (ED) abzugeben ist, daß dieser Inhalt am Ausgang abgegeben wird, daß mit Hilfe des Adressenrechners (AD1) und der Angabennim Mikrobefehl der neue Inhalt dieses Adressenregisters berechnet wird und dieser neue Inhalt in dieses Adressenregister gespeichert wird, während der Mikrobefehl im ersten Mikrobefehlsregister (MBR1) gespeichert ist.

12. Verfahren nach Anspruch 111 dadurch gekennzeiichet, daß die Schniitstellenschaltung (BEU) die am Ausgang (ED) der Adresseneinheit (AU) abgegebene Adresse in die Adressenpufferschaltung (PS1) übernimmt und an den Adreßbus (AB) anlegt, und bei Vorliegen eines Schreibbefehls das in der Datenpufferschaltung (PS2) enthaltene Schreibdatum an den externen Datenbus (DB) anlegt, während der Mikrobefehl im erstee Mikrobefehlsregister (MBR1) enthalten ist.

13. Verfahren nach einem der Ansprüche 10 bis 12, dadurch gekennzeichnet, daß die zweite Mikrobefehlsregistereinheit (MBE2) den ersten Mikrobefehl (MB1) aus dem zweiten Mikrobefehlsregister (MBR2) der ersten Mikrobefehlsregistereinheit übernimmt und die dem ersten Mikrobefehl zugeordneten Steuersignale an den internen Adreß/Steuerbus (IA) gibt, während in das erste Mikrobefehlsregister (MBR1) der ersten Mikrobefehlsregistereinheit der nächste zu bearbeitende Mikrobefehl (MB2) übernommen worden ist.

14. Verfahren nach Anspruch 13, dadurch gekennzeichnet, daß bei Vorliegen eines Lesebefehls nach Ausgabe der Adresse auf den externen Adreßbus (AB) durch die Schnittstellenschaltung (BEU) aufgrund des ersten Mikrobefehls (MB1) in der zweiten Mikrobefehlsregistereinheit (ME2) das auf dem externen Datenbus (DB) anliegende Lesedatum in die Datenpufferschaltung (PS2) übernommen wird und von dort im Zielregister abgespeichert wird.

15. Verfahren nach einem der Ansprüche 9 bis 14, dadurch gekennzeichnet, daß die Bytezählereinheit (BZ) während der Speicherung des Mikrobefehles im ersten Mikrobefehlsregister (MBR1) der ersten Mikrobefehlsregistereinheit (MBE1) seinen Inhalt um eine Einheit verringert.

16. Verfahren nach Anspruch 15, dadurch gekennzeichnet, daß in einem ersten Taktzyklus (TZ1) der bereits im Mikrobefehlszwischenregister (MPIR) gespeichert erste Mikrobefehl (MB1) in das erste Mikrobefehlsregister (MBR1) der ersten Mikrobefehlsregistereinheit (ME1) übernommen wird und dort bis zum Ende eines zweiten Taktzyklus (TZ2) gespeichert ist, daß in der zweiten Hälfte des zweiten Taktzyklus (TZ2) der erste Mikrobefehl (MB1) vom ersten Mikrobefehlsregister in das zweite Mikrobefehlsregister (MBR2) übernommen wird und dort bis zur Hälfte eines vierten Taktzyklus (TZ4) gespeichert wird, daß zu Beginn des vierten Taktzyklus (TZ4) der erste Mikrobefehl (MB1) vom zweiten Mikrobefehlsregister in die zweite Mikrobefehlsregistereinheit (MBE2) übernommen wird und bis zum Ende eines fünften Taktzyklus TZ5 an den internen Adreß/Steuerbus (IA) angelegt wird, daß in der zweiten Hälfte des ersten Taktzyklus (TZ1) das im ersten Mikrobefehl (MB1) adressierte Adressenregister (ADR) in der Adresseneinheit (AU) gelesen wird, daß in der ersten Hälfte des zweiten Taktzyklus (TZ2) der Inhalt dieses Adressenregisters durch den Adressenrechner (AD1) neu berechnet wird und der neue Inhalt in der zweiten Hälfte des zweiten Taktzyklus (TZ2) in dieses Adressenregister zurückgeschrieben wird, daß mit Beginn des zweiten Taktzyklus (TZ2) die Adresse aus der Adresseneinheit (AU) von der Schnittstellenschaltung (BEU) an den externen Adreßbus (AB) gelegt wird und zwar bis zum Ende eines dritten Taktzyklus (TZ3), daß bei einem Schreibbefehl mit Beginn des dritten Taktzyklus (TZ3) bis zum Ende des vierten Taktzyklus (TZ4) das Schreibdatum von der Schnittstellenschaltung an den externen Datenbus (DB) angelegt wird, daß bei Vorliegen eines Lesebefehls in der ersten Hälfte des vierten Taktzyklus (TZ4) das auf dem externen Datenbus (DB) liegende Lesedatum von der Schnittstellenschaltung übernommen wird, daß in der zweiten Hälfte des vierten Taktzyklus (TZ4) das Lesedatum in die Dateneinheit (DU) übertragen wird und dort gespeichert wird, daß in der ersten Hälfte des ersten Taktzyklus (TZ1) von der Mikroprogrammeinheit (SRU) die Adresse des nächsten zu bearbeitenden Mikrobefehls (MB2) berechnet wird und während der zweiten Hälfte des ersten Taktzyklus (TZ1) gespeichert wird, und daß während der ersten Hälfte des zweiten Taktzyklus (TZ2) der nächste Mikrobefehl (MB2) gelesen wird und in der zweiten Hälfte des zweiten Taktzyklus in das Mikrobefehlszwischenregister (MPIR) gespeichert wird usw..

17. Verfahren nach Anspruch 16, dadurch gekennzeichnet, daß die nacheinander zu bearbeitenden Mikrobefehle zu Mikroprogrammen gehören können, die verschiedenen Kanälen zugeordnet sind.

18. Verfahren nach einem der Ansprüche 9 bis 17, dadurch gekennzeichnet, daß vor Beginn der Bearbeitung eines Kanalprogramms der Mikroprozessor (MP) den Startbefehl in das Befehlsregister (GCR), die Adresse des ersten Kanalbefehles in das zugeordnete Adressenregister der Adresseneinheit (AU) und den Modus des Datentransfers in das Modusregister (GMR) einspeichert, daß dann die Mikroprogrammeinheit (SRU) aus dem Startbefehl die Adresse des ersten Mikrobefehles (MB1) des dem Startbefehl zugeordneten Mikroprogramms erzeugt, diesen liest und an die erste Mikrobefehlsregistereinheit (ME1) übergibt, daß aufgrund der Mikrobefehle der erste Kanalbefehl in das Kanalbefehlsregister (CCR), die Adresse des Datensenders und die Adresse des Datenempfängers in die zugeordneten Adressenregister der Adresseneinheit (AU) und der Bytezähler (BZ) geladen wird und daß dann der erste Kanalbefehl ausgeführt wird.

**Revendications**

1. Dispositif de commande DMA pour la transmission de données entre un émetteur de données et un récepteur de données par l'intermédiaire d'un bus externe, qui est constitué par un bus de transmission de données, un bus de transmission d'adresses et un bus de commande et auquel sont raccordées une multiplicité d'émetteurs/récepteurs de données et au moins un microprocesseur, et dans lequel la transmission s'effectue en fonction d'un programme de canaux contenant des instructions de transfert de canaux et des instructions de commande de canaux, et dans lequel l est prévu une unité centrale de commande (CCU), un unité de transmission d'adresses (AU), une unité de transmission de données (DU), une unité de comptage d'octets (BZ), un circuit (BEU) d'interface de liaison au bus et un ensemble de registres de commande (CR), caractérisé par le fait que l'unité centrale de commande (CU) adresse, en fonction d'une instruction de canal, une micro-instruction d'un microprogramme associé à l'instruction de canal, et par conséquent envoie des signaux d'adresses et de commande, correspondant à la micro-instruction, à un bus interne de transmission d'adresses/de commande (IA), que l'unité (AU) de transmission d'adresses est raccordée à un bus interne de transmission d'adresses/de commande (IA) et à un bus interne de transmission de données (ID), mémorise les adresses de l'émetteur de données, du récepteur de données et du programme de canaux, délivre sur la sortie (ED) une adresse répondant à la micro-instruction et simultanément calcule et mémorise la nouvelle adresse, qui less données devant être transmites sont mémorisée est temporairement dans l'unité de transmission de données (DU) et dont soumises éventuellement à des opérations de comparaison, et que cette unité de transmission de données (DU) est raccordée au bus interne de transmission d'adresses/de commande (IA) et au bus interne de transmission de données (ID), que l'unité de comptage d'octets (BZ) est raccordée au bus interne de transmission de données (ID) et au bus de transmission d'adresses/de commande (IA) et compte le nombre des octets devant être transmis, lors d'une commande de transfert et, lorsque le nombre désiré est atteint, envoie un signal à l'unité centrale de commande (CCU), que le circuit (BEU) d'interface de liaison au bus est relié à ls sortie de l'unité de transmission d'adresses (AU), au bus externe de transmission d'adresses (AD) et à un bus interne de commande de transmission d'adresses/de commande (IA), et est raccordé au bus externe de transmission de données (DB) pour la transmission des données en direction/à partir de l'unité de transmission de données (DU), que l'ensemble de registres de commande (CR) est relié au bus interne de transmission de données (ID) et au bus de transmission d'adresses/de commande (IA) pour la réception d'un mot d'instruction de canal, de mots d'état et d'autres informations de commande, et que des lignes de transmission de signaux de commande partent de l'ensemble de registres de commande (CR) pour aboutir à l'unité centrale de commande (CCU) et que les unités sont agencées de manière à exécuter de façon indépendante les tâches qui leur sont affectées.

2. Disposiiif de commande selon la revendication 1, caractérisé par le fait que l'unité centrale de commande (CCU) est constituée par une unité à microprogrammes (SRU) comportant un séquenceur (SE), une mémoir de microprogrammes (MPS) reliée au séquenceur et servant à recevoir les microprogrammes associés aux instruction de canaux, et un registre intermédiaire de micro-instructions (MPI) relié à la mémoire de microprogrammes, par une première unité formant registre de micro-instructions (MBE1), comportant un premier registre de micro-instructions (MBR1) relié au registre intermédiaire d micro-instructions (MPIR) ee raccordé au bs inteene de transmisson d'adresses/de commande (LA), à l'unité de transmission d'adresses (AU) et au séquenceur (SE), et un second registre de micro-instructions (MBR2) relié au premier registre de micro-instructions, et par une seconde unité formant registre de micro-instructioṅs (MBE2), qui est reliée au second registre de micro-instructions et est raccordée au bus interne de transmission d'adresses/de commande (IA).

3. Dispositif de commande suivant l revendication 1 ou 2,,caractérisé par le ait que l'unité de transmission d'adresses (AU) est constituée par un ensemble de registres d'adresses (ADR) servant à mémoriser les adresses de l'émetteur de données, du récepteur de données et du programme de canaux et qui est relié auu us interne de transmission d'adresses/de commande (IA) pour le transfert des adresses d'un registre d'adresses devant être chargé et au bus interne de transmission de données (ID) pour le transfert dd contenu, devant être chargé, du registre d'adresses adressé et qui est raccordé auupremier registre de micro-instructions (MBR1) pourr e transfert de l'adresse (ARG) du registre d'adresses, dont le contenu présent sur la ssotie (ED) est transmii au circuit d'interface (BEU), et par un calculateur d'adresses (ADD½(, DONT LA SORTIE EST RELIÉ À L'ENTRÉE DE L'ENSEMBLE FORMANT REGISTRE D'ADRESSES (ADR)),et dont une entrée eet reliée à la sortie (ED) de l'ensemble de registres d'adresses et dont l'autre entrée est reliée à un multiplexeur (MUX3), au moyen duquel est délivrée la grandeur devant être ajoutée à l'adresse sortant du registre d'adresses.

4. Dispositif de commande suivant l'une des revendications précédentes, caractérisé par le fait que le circuit d'interface (BEU) estt onstitué par un circuit tampon d'adresses (PS1), qui est raccordé à la sortie de l'unité de transmission d'adresses (AU) et est relié au bus externe de transmission d'adresses (AB) et, par l'intermédiaire d'un interrrpteur (S1) au bus interne de transmission d'adresses/de commande (IA), par un circuit tampon de données (PS2), qui est relié au bus externe de transmission de données (DB) par l'intermédiaire d'un registre d'entrée (EPS) et d'un registreede sortie (APS), e par un générateurrde cadence (TG), quii roduit, à partir d'une cadence extérieure )cl), les signaux de cadence (T1, T2), nécessaires pour la coopération entre les unités.

5. Dispositif de cmmande suivant la reveedication 4, caractérisé par le ait que l'unité de transmission de données (DU) est constituée par un registre de données (DAR), qui est disposé entre le registre d'entrée (EPS) et le registre de sortie (APS) du circuit d'interface et est relié au bus interne de transmission de données (ID) et au bus de transmission d'adresses/de commmnde (IA).

6. Disppsitif de commande suivant l'une des revendications précédentes,,caractérisé par leefait que l'unité formant registre de commande (CR) est constituée par un registre d'é5at de canaux (CSR) reeié au séquenceur ((E) et dans lequel l'ee5tat des canaux est mémorisé à la fin du transfert des donnée d'une instruction de ttansfert, par un registre d'instructions (GCR)) dans lequel l'instruction de départ/d'arrêt est mémorisée, par un registre de modes (GMR), dans lequel le type du transfert de dnnées est mémoriś, et par un registre d'instructions de canaux (CCR), dans lequel e mot d'instruction de canaux est mémorisé.

7. Dispositif de commande suivant la revendication 6, caractériss par le fait qu'un registre de micro-adresses (MA) et un registre intermédiaire de micro-instructions (MPIR) situés dans l'unité à microprogrammes (SRU), les reegstres d'adresses (ADRR)situés dans l'unitee5 de transmission d'adresses (AU), le registre de données (DAR) et les registres de commande (CSR, CCR), sont prévus d'une maniire multiple conformément au nombre des canaux de transmission et qu'il est prévu, dans l'unité centrale de commande (CCU), un circuit à priorités (PR), qui sélectionne les egistres associés à un canal sélectionné, en fonction d'une décision de priorité.

8. Dispositif de commmnde suivant l'une des rrvendications précédentes, caractérisé par le fait qu'il est réalisé selon la technologie MOS, sous la forme d'un module.

9. Dispositif de commande DMA pour la transmission de données entre un émetteur de données, et une récepteur de données par l'intermédiaire d'un bus externe, qui est constitué par un bus de transmission de données, un bus de transmission d'adresses et un bus de commande et auquel sont recordés une multiplicité d'émetteurs/récepteurs de données et au moins un microprocesseur, et dans lequel la transmission s'effectue en fonction d'un programme de canaux contenant des instructions de transfert de canaux et des instructions de commande de canaux, et dans lequel il est prévue une unité centrale de commande (CCU), une unité de transmission d'adresses (AU), une unité de transmission de données (DU), une unité de comptage d'octets (BZ), un circuit (BEU) d'interface de liaison au bus et une unité formant registre de commande (CR), et dans lequel l'unité centrale de commande (CCU) est constituée par une unité à microprogrammes (SRU) comportant un séquencer (SE), une mémoire de microprogrammes (MPS) reliée au séquencer et servant à recevoir les microprogrammes associés aux instructions de canaux, et un registre intermédiaire de micro-instructions (MPIR) relié à la mémoire de microprogrammes, par une première unité formant registre de micro-instructions (MBE1), comportant une permier registre de micro-instructions (MBR1), relié au registre intermédiaire de micro-instructions (MPIR) et raccordé au bus interne de transmission d'adresses/de commande (IA), à l'unité de transmission d'adresses (AU) et au séquenceur (SE), et un second registre de micro-instructions (MBR2) relié au premier registre de micro-instructions, et par une seconde unité formant registre de micro-instructions (MBE2), qui est reliée au second registre de micro-instructions et est raccordée au bus interne de transmission d'adresses/de commande (IA), caractérisé par le fait que l'unité à microprogrammes (SRU) produit, en foncttin de l'instruction du canal dans le registre d'instructions de canaux (CCR) et à partir d'une instruction dans le registre d'instructions (GCR), l'adresse d'une première micro-instruction (MB1) du microprogramme associé à l'instruction, et transmet la micro-instruction associée à son adresse, dans le registre intermédiaire de microinstructions (MPIR), et qu'ensuite l'unité à microprogrammes produit l'adresse de la micro-instruction (MB2) immédiatement suivant du microprogramme et transmet cette micro-instruction dans le registre intermédiaire de micro-instructions (MPIR).

10. Procédé suivant la revendication 9, caractérisé par le fait qu'après la mémorisation de la première micro-instruction (MB1) dans le registre intermédiaire de micro-instructions (MPIR), la première unité formant registre de micro-instructions (MBE1) prend en charge cette micro-instruction dans le premier registre de micro-instructions (MBR1) et la retransmet ensuite au second registre de micro-instructions (MBR2), tandis que l'unité à microprogrammes (SRU) produit l'adresse de la micro-instruction immédiatement suivante (MB2) et transmet cette dernière dans le registre intermédiaire de micro-instructions (MPIR), et qu'ensuite la micro-instruction immédiatement suivant (MB2) et transmise par le registre intermédiaire de micro-instructions dans le premier registre de micro-instructions.

11. Procédé suivant la revendication 10, caractérisé par le fait que l'unité de transmission d'adresses (AU) reçoit, de la part du premier registre de micro-instructions (MBR1), l'adresse, contenue dans la micro-instruction, du registre d'adresses (ADR), dont le contenu doit être délivré à la sortie (ED), que ce contenu est délivré à la sortie, qu'à l'aide du calculateur d'adresses (AD) et des indications contenues dans le micro-instruction, le nouveau contenu de ce registre d'adresses est calculé et que ce nouveau contenu est mémorisé dans ce registre d'adresses, tandis que la micro-instruction est mémorisée dans le premier registre de micro-instructions (MBR1).

12. Procédé suivant la revendication 11, caractérisé par le fait que le circuit d'interface (BEU) transfère l'adresse, délivrée sur la sortie (ED) de l'unité de transmission d'adresses (AU), dans le circuit tampon d'adresses (PS1) et l'envoie au bus de transmission d'adresses (AB) et, lors de la présence d'une instruction d'enregistrement, envoie la donnée d'enregistrement, contenue dans le circuit tampon de données (PS2), au bus externe de transmission de données (DB), tandis que la micro-instruction est contenue dans le premier registre de micro-instructions (MBR1).

13. Procédé suivant l'une des revendications 10 à 12, caractérisé par le fait que la seconde unité formant registre de micro-instructions (MBE2) transmet la première micro-instruction (MB1) à partir du second registre de micro-instructions (MBR2) de la première unité formant registre de micro-instructions et envoie les signaux de commande associés à la première micro-instruction, au bus interne de transmission d'adresses/de commande (IA), tandis que la micro-instruction immédiatement suivante (MB2) devant être traitée à été transférée dans le premier registre de micro-instructions (MBR1) de la première unité formant registre de micro-instructions.

14. Procédé suivant la revendication 13, caractérisé par le fait que, dans le cas de la présence d'une instruction de lecture, après la délivrance de l'adresse au bus externe de transmission d'adresses (AB), la donnée de lecture envoyée au bus externe de transmission de données (DB) est transférée par le circuit tampon de données PS2) au moyen du circuit d'interface (BEU), sur la base de la première micro-instruction (MB1) située dans la seconde unité formant registre de micro-instructions (MB2), et, à partir de là, est mémorisée dans le registre de destination.

15. Procédé suivant l'une des revendications 9 à 14, caractérisé par le fait que pendant la mémorisation de la micro-instruction dans le premier registre de micro-instructions (MBR1) de la première unité formant registre de micro-instruction (MBE1), le contenu de l'unité de comptage d'octets (BZ) est réduit d'une unité.

16. Procédé suivant la revendication 15, caractérisé par le fait qu'au cours d'un premier cycle de cadence (TZ1), la première micro-instruction (MB1) déjà mémorisée dans le registre intermédiaire de micro-instructions (MPIR) est transférée dans le premier registre de micro-instructions (MB1) de la première unité formant registre de micro-instructions (ME1) et, dans ce dernier, est mémorisée jusqu'à la fin d'un second cycle de cadence (TZ2), que pendant la seconde moitié du second cycle de cadence (TZ2), la première micro-instruction (MB1) est transférée du premier registre de micro-instructions dans le second registre de micro-instructions (MBR2) et est mémorisée, dans ce dernier, jusqu'à la moitié du quatrième cycle de cadence (TZ4), qu'au début du quatrième cycle de cadence (TZ4), la première micro-instruction (MB1) est transférée du second registre de micro-instructions dans la seconde unité formant registre de micro-instructions (MBE2), et est appliquée jusqu'à la fin du cycle de cadence (TZ5) au bus interne de transmission d'adresses/de commande (IA), que pendant la seconde moitié du premier cycle de cadence (TZ1), le registre d'adresses (ADR) adressé dans la première micro-instruction (MB1) dans l'unité de transmission d'adresses (AU) est lu, que pendant la première moitié du second cycle de cadence (TZ2), le contenu de ce registre d'adresses est à nouveau calculé par le calculateur d'adresses (AD1) et le nouveau contenu est réenregistré pendant la second moitié du second cycle de cadence (TZ2) dans ce registre d'adresses, qu'au début du second cycle de cadence (TZ2), l'adresse est tirée de l'unité de transmission d'adresses (AU) pour être envoyée, au moyen du circuit d'interface (BEU), au bus externe de transmission d'adresses (AB), et ce jusqu'à la fin d'un troisième cycle de cadence (TZ3), que lors de l'apparition d'une instruction d'enregistrement au début du troisième cycle de cadence (TZ3) et jusqu'à la fin du quatrième cycle de cadence (TZ4), la donnée d'enregistrement est appliquée par le circuit d'interface au bus externe de transmission de données (DB), que lors de la présence d'une instruction de lecture pendant la première moitié du quatrième cycle de cadence (TZ4), la donnée de lecture appliquée au bus externe de transmission de données (DB) est prise en charge par le circuit d'interface, que pendant la seconde moitié du quatrième cycle de cadence (TZ4), la donnée de lecture est transmise dans l'unité de transmission de données (DU) et y est mémorisée, que pendant la première moitié du premier cycle de cadence (TZ1), l'adresse de la micro-instruction immédiatement suivante (MB2) devant être traitée est calculée par l'unité à microprogrammes (SRU) et est mémorisée pendant la seconde moitié du premier cycle de cadence (TZ), et que pendant la première moitié du second cycle de cadence (TZ2), la micro-instruction (MB2) mmédiatement suivante est lue et mémorisée dans le registre intermédiaire de micro-instructions (MPIR), pendant la seconde moitié du second cycle de cadence.

17. Procédé suivant la revendication 16, caractérisé par le fait que les micro-instructions, qui doivent être traitées successivement, peuvent appartenir à des microprogrammes qui sont associées à différents canaux.

18. Procédé suivant l'une des revendications 9 à 17, caractérisé par le fait qu'avant le début du traitement d'un programme de canaux, le microprocesseur (MP) mémorise l'instruction de départ dans le registre d'instructions (GCR), l'adresse de la première instruction de canal dans le registre d'adresses associée de l'unité de transmission d'adresses (AU) et le mode du transfert de données dans le registre de modes (GMR), qu'ensuite l'unité à microprogrammes (SRU) produit, à partir de l'instruction de départ, l'adresse de la première micro-instruction (MP1) du microprogramme associé à l'instruction de démarrage, lit cette dernière et la transmet à la première unité formant registre de micro-instructions (ME1), que sur la base des micro-instructions, la première instruction de canal est chargée dans le registre d'instructions de canaux (CCR) et que l'adresse de l'émetteur de données et l'adresse du récepteur de données sont chargées dans le registre d'adresses associé de l'unité de transmission d'adresses (AU) et du compteur d'octets (BZ) et qu'ensuite la première instruction de canal est exécutée.

**Claims**

1. DMA control device for transmitting data between a data transmitter and a data receiver via an external bus which consists of a data bus, address bus and control bus and to which a multiplicity of data transmitters/receivers and at least one microprocessor are connected, and in which the transmission is dependent on a channel transfer command and channel program containing channel transfer commands, there being provided a central control unit (CCU), an address unit (AU), a data unit (DU), a byte counter unit (BZ), a bus interface circuit (BEU) and a control register set (CR), characterized in that the central control unit (CU) addresses, in dependence of a channel command, a microcommand of a microprogram assigned to the channel command and thus applies address and control signals corresponding to the microcommand to an internal address/control bus (IA), in that the address unit (AU) is connected to the internal address/control bus (IA) and to an internal data bus (ID), stores the addresses of the data transmitter, data receiver and of the channel program and issues at the output (ED) an address triggered in the microcommand and at the same time computes the new address and stores it, in that in the data unit (DU) the data to be transmitted are buffered and comparison operations may be carried out and in that this data unit (DU) is connected to the internal address/control bus (IA) and to the internal data bus (ID), in that the byte counter unit (BZ) is connected to the internal data bus (ID) and address/control bus (IA) and counts the number of bytes to be transmitted in the event of a transfer command, and, on reaching the desired number, sends a signal to the central control unit (CCU), in that the bus interface circuit (BEU) is connected to the output of the address unit (AD), to the external address bus (AD) and to the internal address/control bus (IA) and is connected to the external data bus (DB) for transmitting the data to/from the data unit (DU), in that the control register set (CR) is connected to the internal data bus (ID) and address/control bus (IA) for receiving channel command word, status words and other control information, and lines lead from the control register set (CR) to the central control unit (CCU) for the transmission of control signals and in that the units are realized in such a way that they independently carry out the tasks transferred to them.

2. Control device according to Claim 1, characterized by the central control unit (CCU) consisting of a microprogram unit (SRU) having a sequencer (SE); having a microprogram memory (MPS) connected to the sequencer for receiving the microprogrammes associated with the channel commands and having a microcommand intermediate register (MPIR) connected to the microprogramme memory, consisting of a first microcommand register unit (MBE1) having a first microcommand register (MBR1) connected to the microcommand intermediate register (MPIR), which microcommand register is connected to the internal address/control bus, to the address unit (AU) and to the sequencer (SE), and having a second microcommand register (MBR2) connected to the first microcommand register, and consisting of a second microcommand register unit (MBE2) which is connected to the second microcommand register and to the internal address/control bus (IA).

3. Control device according to Claim 1 or 2, characterized by the address unit (AU) consisting of an address register set (ADR) for storing the data transmitter addresses, data receiver addresses and channel programme addresses, which address register set is connected to the internal address/control bus (IA) for receiving the addresses of an address register to be loaded and to the internal data bus (ID) for receiving the contents to be loaded of the addressed address register and which address register set is connected to the first microcommand register (MBR1) for receiving the address (ARG) of that address register, the contents of which are transferred to the output (ED) to the interface circuit (BEU), and consisting of an address computer (AD1), the output of which is connected to the input of the address register set (ADR), the one input of which is connected to the output (ED) of the address register set and the other input of which is connected to a multiplexer (MUX3), via which the variable which is to be added to the address issued by the address register is fed.

4. Control device according to one of the preceding claims, characterized by the interface circuit (BEU) consisting of an address buffer circuit (PS1) which is connected to the output of the address unit (AU) and which is connected to the external address bus (AB) and via a switch (S1) to the internal address/control bus (IA), consisting of a data buffer circuit (PS2) which is connected to the external data bus (DB) via an input register (EPS) and output register (APS) and consisting of a clock generator (TG), which generates from an external clock (CL) clock signals (T1, T2) which are necessary for the cooperation of the units.

5. Control unit according to Claim 4, characterized by the data unit (DU) consisting of a data register (DAR) which is arranged between the input register (EPS) and the output register (APS) of the interface circuit and which is connected to the internal data bus (ID) and address/control bus (IA).

6. Control device according to one of the preceding claims, characterized by the control register set (CR) consisting of a channel status register (CSR) connected to the sequencer (SE), in which channel status register the status of the channels after the termination of the data transfer of a transfer command is stored, consisting of a command register (GCR), in which the start/stop command is stored, consisting of a modus register (GMR), in which the type of the data transfer is stored and consisting of a channel command register (CCR), in which the channel command word is stored.

7. Control device according to Claim 6, characterized in that a microaddress register (MA) and the microcommand intermediate register (MPIR) in the microprogramme unit (SRU), the address register (ADR) in the address unit (AU), the data register (DAR) and the control registers (CSR, CCR) are realized multiply corresponding to the number of transmission channels and in that, in the central control unit (CCU) a priority circuit (PR) is provided which selects the registers assigned to a selected channel corresponding to a priority decision.

8. Control device according to one of the preceding claims, characterized in that it is realized in MOS technology in one component.

9. Method for operating a DMA control device for transmitting data between a data transmitter and a data receiver via an external bus consisting of a data bus, address bus and control bus, to which external bus a multiplicity of data transmitters/receivers and at least one microprocessor are connected and, in which control device the transmission occurs in dependence of a channel transfer command and channel program containing channel control commands, there being provided a central control unit (CCU), an address unit (AU), a data unit (DU), a byte counter unit (BZ), a bus interface circuit (BEU) and control register set (CR), the central control unit (CCU) consisting of a microprogram unit (SRU) with a sequencer (SE); having, connected to the sequencer, a microprogram memory (MPS) for receiving the microprogrammes assigned to the channel commands and having a microcommand intermediate register (MPIR) connected to the microprogramme memory, and consisting of a first microcommand register unit (MBE1) having, connected to the microcommand intermediate register (MPIR), a first microcommand register (MBR1) which is connected to the internal address/control bus (IA), to the address unit (AU) and to the sequencer (SE) and having a second microcommand register (MBR2) connected to the first microcommand register, and consisting of a second microcommand register unit (MBE2) which is connected to the second microcommand register and to the internal address/control bus (IA), characterized in that the microprogram unit (SRU) generates, in dependence of the channel command in the channel command register (CCR) or of a command in the command register (GCR), the address of a first microcommand (MB1) of the microprogram assigned to the command and transfers the microcommand assigned to the microcommand address into the microcommand intermediate register (MPIR) and in that the microprogram unit then generates the microcommand address of the next microcommand (MB2) of the microprogram and transfers this microcommand into the microcommand intermediate register (MPIR).

10. Method according to Claim 9, characterized in that the first microcommand register unit (MBE1) transfers, after its storage in the microcommand intermediate register (MPIR), the first microcommand (MB1) into the first microcommand register (MBR1) and then passes it on to the second microcommand register (MBR2), whilst the microprogram unit (SRU) generates the address of the next microcommand (MB2) and transfers the latter into the microcommand intermediate register (MPIR) and in that the next microcommand (MB2) is then transferred from the microcommand intermediate register into the first microcommand register.

11. Method according to Claim 10, characterized in that the address unit (AU) of the first microcommand register (MBR1) receives the address, contained in the microcommand, of the address register (ADR), the contents of which are to be issued at the output (ED) in that these contents are issued at the output, in that, with the aid of the address computer (AD1) and of the information in the microcommand, the new contents of this new address register are computed and these new contents are stored in this address register, whilst the microcommand is stored in the first microcommand register (MBR1).

12. Method according to Claim 11, characterized in that the interface circuit (BEU) transfers the address issued at the output (ED) of the address unit (AU) into the address buffer circuit (PS1) and sends it to the address bus (AB), and in the presence of a write command sends the write data contained in the data buffer memory (PS2) to the external data bus (DB) whilst the microcommand is contained in the first microcommand register (MBR1).

13. Method according to one of Claims 10 to 12, characterized in that the second microcommand register unit (MBE2) transfers the first microcommand (MB1) from the second microcommand register (MBR2) to the first microcommand register unit and sends the control signals assigned to the first microcommand to the internal address/control bus (IA), whilst the next microcommand (MB2) to be processed has been transferred into the first microcommand register (MBR1) of the first microcommand register unit.

14. Method according to Claim 13, characterized in that, in the presence of a read command after issuance of the address to the external address bus (AB) by the interface circuit (BEU) as a result of the first microcommand (MB1) in the second microcommand register unit (ME2), the read data item present at the external data bus (DB) is transferred into the data buffer circuit (PS2) and from there is stored in the target register.

15. Method according to one of Claims 9 to 14, characterized in that the byte counter unit (BZ) decrements its contents by one unit during the storage of the microcommand in the first microcommand register (MBR1) of the first microcommand register unit (MBE1).

16. Method according to Claim 15, characterized in that, in a first clock cycle (TZ1), the first microcommand (MB1) already stored in the microcommand intermediate register (MPIR) is transferred into the first microcommand register (MBR1) of the first microcommand register unit (ME1) and is stored there until the end of a second clock cycle (TZ2), in that, in the second half of the second clock cycle (TZ2), the first microcommand (MB1) is transferred from the first microcommand register into the second microcommand register (MBR2) and is stored there until one half of a fourth clock cycle (TZ4), in that, at the beginning of the fourth clock cycle (TZ4), the first microcommand (MB1) is transferred from the second microcommand register into the second microcommand register unit (MBE2) and is sent to the internal address/control bus (IA) until the end of a fifth clock cycle (TZ5), in that, in the second half of the first clock cycle (TZ1), the address register (ADR) addressed in the first microcommand (MB1) is read in the address unit (AU), in that in the first half of the second clock cycle (TZ2), the contents of this address register are recomputed by the address computer (AD1) and the new contents in the second half of the second clock cycle (TZ2) are written back into this address register, in that, at the beginning of the second clock cycle (TZ2), the address is sent from the address unit (AU) by the interface circuit (BEU) to the external address bus (AB) and to be precise until the end of a third clock cycle (TZ3), in that, in the presence of a write command at the beginning of the third clock cycle (TZ3) until the end of the fourth clock cycle (TZ4), the write data item is sent by the interface circuit to the external data bus (DB), in that, in the presence of a read command in the first half of the fourth clock cycle (TZ4), the read data item present at the external data bus (DB) is transferred by the interface circuit, in that, in the second half of the fourth clock cycle (TZ4), the read data item is transferred into the data unit (DU) and is stored there, in that, in the first half of the first clock cycle (TZ1) of the microprogram unit (SRU), the address of the next microcommand (MB2) to be processed is computed and is stored during the second half of the first clock cycle (TZ1), and in that, during the first half of the second clock cycle (TZ2), the next microcommand (MB2) is read and is stored etc. in the microcommand intermediate register (MPIR) in the second half of the second clock cycle.

17. Method according to Claim 16, characterized in that the microcommands to be successively processed can belong to microprograms which are assigned to various channels.

18. Method according to one of Claims 9 to 17, characterized in that, before the beginning of the processing of a channel program, the microprocessor (MP) stores the start command in the command register (GCR), the address of the first channel command in the assigned address register of the address unit (AU) and the mode of the data transfer in the mode register (GMR), in that the microprogram unit (SRU) then generates from the start command the address of the first microcommand (MB1) of the microprogram assigned to the start command, reads the latter and transfers to the first microcommand register unit (ME1), in that, as a result of the microcommands, the first channel command is loaded into the channel command register (CCR), the address of the data transmitter and the address of the data receiver is loaded into the assigned address registers of the address unit (AU) and of the byte counters (BZ) and in that the first channel command is then carried out.

FIG 1

EP 0 108 969 B1

F I G 2

EP 0 108 969 B1

FIG 3

## F I G 4

# FIG 5

# FIG 6

FIG 7